(19) Europäisches Patentamt
European Patent Office
Office européen des brevets

(11) EP 2 595 729 B1

(12) # EUROPÄISCHE PATENTSCHRIFT

(45) Veröffentlichungstag und Bekanntmachung des Hinweises auf die Patenterteilung:
**02.09.2015 Patentblatt 2015/36**

(21) Anmeldenummer: **11730261.2**

(22) Anmeldetag: **28.06.2011**

(51) Int Cl.:
***B01D 53/22*** (2006.01) ***B01D 71/02*** (2006.01)
***C01B 3/50*** (2006.01) ***C01F 17/00*** (2006.01)
***C01G 41/00*** (2006.01) ***C04B 35/01*** (2006.01)
***C04B 35/495*** (2006.01) ***C04B 35/50*** (2006.01)

(86) Internationale Anmeldenummer:
**PCT/EP2011/060832**

(87) Internationale Veröffentlichungsnummer:
**WO 2012/010386 (26.01.2012 Gazette 2012/04)**

(54) **CO2 TOLERANTES, GEMISCHT LEITENDES OXID UND DESSEN ANWENDUNG FÜR DIE WASSERSTOFFABTRENNUNG**

C02-TOLERANT CONDUCTING MIXED OXIDE AND ITS USE FOR HYDROGEN SEPARATION

OXYDE MIXTE CONDUCTEUR TOLÉRANT AU CO2 ET SON UTILISATION POUR LA SÉPARATION D'HYDROGÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2010 DE 102010027645**

(43) Veröffentlichungstag der Anmeldung:
**29.05.2013 Patentblatt 2013/22**

(73) Patentinhaber:
- **Forschungszentrum Jülich GmbH**
**52425 Jülich (DE)**
- **Universidad Politecnica De Valencia**
**46022 Valencia (ES)**
- **Consejo Superior De Investigaciones Científicas (CSIC)**
**28006 Madrid (ES)**

(72) Erfinder:
- **MEULENBERG, Wilhelm, Albert**
**NL-6294 AA Vijlen (NL)**
- **IVANOVA, Mariya**
**52428 Jülich - Stetternich (DE)**
- **BUCHKREMER, Hans, Peter**
**52525 Heinsberg (DE)**
- **STÖVER, Detlev**
**52382 Niederzier (DE)**
- **ALFARO, José, Manuel, Serra**
**E-46021 Valencia (ES)**
- **ESCOLÁSTICO, Sonia**
**E-46149 Gilet**
**Valencia (ES)**

(74) Vertreter: **Gille Hrabal**
**Brucknerstrasse 20**
**40593 Düsseldorf (DE)**

(56) Entgegenhaltungen:
**EP-A1- 1 048 613**

- **HAUGSRUD R ET AL: "Effects of protons and acceptor substitution on the electrical conductivity of La6WO12", JOURNAL OF PHYSICS AND CHEMISTRY OF SOLIDS, PERGAMON PRESS, LONDON, GB, Bd. 69, Nr. 7, 1. Juli 2008 (2008-07-01), Seiten 1758-1765, XP022701764, ISSN: 0022-3697, DOI: 10.1016/J.JPCS.2008.01.002 [gefunden am 2008-01-12]**
- **YOSHIMURA M ET AL: "Electrical conductivity of solid solutions in the system CeO2@?La6WO12", MATERIALS RESEARCH BULLETIN, ELSEVIER, KIDLINGTON, GB, Bd. 10, Nr. 9, 1. September 1975 (1975-09-01), Seiten 983-988, XP024076491, ISSN: 0025-5408, DOI: 10.1016/0025-5408(75)90080-X [gefunden am 1975-09-01]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- **SHIMURA T ET AL: "Proton conduction in non-perovskite-type oxides at elevated temperatures", SOLID STATE IONICS, NORTH HOLLAND PUB. COMPANY. AMSTERDAM; NL, NL, Bd. 143, Nr. 1, 1. Juni 2001 (2001-06-01), Seiten 117-123, XP004245339, ISSN: 0167-2738, DOI: 10.1016/S0167-2738(01)00839-6**
- **HAUGSRUD ET AL: "Defects and transport properties in Ln6WO12 (Ln=La, Nd, Gd, Er)", SOLID STATE IONICS, NORTH HOLLAND PUB. COMPANY. AMSTERDAM; NL, NL, Bd. 178, Nr. 7-10, 1. Mai 2007 (2007-05-01), Seiten 555-560, XP022053440, ISSN: 0167-2738, DOI: 10.1016/J.SSI.2007.01.004**

## Beschreibung

Die Erfindung betrifft ein $CO_2$ tolerantes, gemischt leitendes Oxid, welches insbesondere für den Einsatz als Membran für die Wasserstoffabtrennung oder als Brennstoffzellenelektrode auch bei hohen Temperaturen geeignet ist.

Stand der Technik

Dichte Oxidkeramiken, die sowohl eine Leitfähigkeit sowohl für Protonen- als auch für Elektronen aufweisen, werden als gemischt elektronisch/protonische Leiter bezeichnet (mixed protonic electronic conductor = MPEC).

MPEC-Materialien sind aus vielen Bereichen der Werkstofftechnik bekannt und werden beispielsweise bei der Herstellung von dichten keramischen Membranen verwendet. Solche Membranen können beispielsweise als Festelektrolyt in einer Protonenleitenden Festoxid-Brennstoffzelle (Proton Conducting Solid Oxide Fuel Cell = PC-SOFC), als Elektrodenkomponente in einer Protonenleitenden Festoxid-Brennstoffzelle unabhängig von Elektrolyttyp, in Systemen für selektive Gastrennung, insbesondere Wasserstoffabtrennung, oder auch in der Petrochemie, eingesetzt werden.

Wenn ein Partialdruckunterschied auf beiden Seiten einer solchen MPEC-Membran angelegt wird, findet gleichzeitig ein Transport von Protonen und Elektronen in dieselbe Richtung statt. Dieses Transportprinzip in fester Materie eröffnet einige Vorteile in der praktischen Anwendung solcher Membranen in unterschiedlichen Prozessen.

Neben der Anwendung in einem Membranreaktor, beispielsweise für eine teilweise Hydrogenierung durch kontrollierten Wasserstoffzufluss, eröffnet sich ein neues und innovatives Anwendungsfeld im Bereich der Pre-Combustion Kraftwerke, bei denen das $CO_2$-Ab-trennungskonzept umgesetzt wird. Mit Hilfe dieser Technologie kann effektiv hochreiner Wasserstoff erzeugt werden, der z. B. direkt in Brennstoffzellen oder Fahrzeugen eingesetzt werden kann. Gleichzeitig wird bei diesen Konzepten eine $CO_2$-Abtrennung ermöglicht, die als eine der größten Herausforderung im Bereich der Umwelttechnologie angesehen wird. Das Pre-Combustion Konzept umfasst mehrere Verfahrensstufen, insbesondere die teilweise Oxidation eines fossilen Brennstoffs (Methan, Erdgas oder Kohle) zu Synthesegas (CO + $H_2$), die Wassergas-Shiftreaktion (WGS), durch die in einem Synthesegas der CO-Anteil minimiert und gleichzeitig der $H_2$-Anteil erhöht wird, und die $CO_2$/$H_2$-Abtrennung durch einen MPEC-Membran.

Wenn eine Seite einer solchen dichten keramischen Membran einer Wasserdampf aufweisenden Atmosphäre ausgesetzt wird, werden durch die dissoziative Adsorption des Wassers, gefolgt von der Kröger-Vinck Reaktion:

$$H_2O + V_0^{\bullet\bullet} + O_O^x \rightarrow 2OH_0^{\bullet} \qquad \text{(Gl. 1)}$$

Protonen erzeugt. Somit spielt die Anwesenheit von Sauerstoff-Leerstellen, die durch die Reaktion hydriert werden, eine wichtige Rolle für die Implementierung von Protonen in dem oxidischen Kristallgitter.

Die dissoziative Adsorption des Wassers an der Membran umfasst dabei die folgenden Teilschritte: a) Wassermoleküle werden in Hydroxylgruppen ($OH^-$) und Protonen ($H^+$) aufgespalten, b) die Hydroxylgruppen ($OH^-$) absorbieren an Sauerstoffionenleerstellen $(V_0^{\bullet\bullet})$, die eine zweifach positive Ladung aufweisen, c) Protonierung der Gitteroxidionen. Da während dieses Prozesses keine freien Elektronen generiert werden, kann die hauptsächlich als Protonenleiter agierende Membran vorteilhaft unter feuchten Bedingungen betrieben werden. Diese Eigenschaft macht eine solche Membran beispielsweise für die Anwendung als dichter Elektrolyt in einer PC-SOFC attraktiv.

Wenn eine Seite einer solchen dichten keramischen Membran einer Wasserstoff reichen Atmosphäre ausgesetzt wird, werden durch die Wasserstoffoxidationsreaktion

$$H_2 \rightarrow 2H^{\bullet} + 2e' \qquad \text{(Gl.2)}$$

neben der Erzeugung von Protonen auch freie Elektronen generiert. Diese Protonen werden anschließend in das Oxidgitter eingebaut, indem sie die Gitteroxidionen protonieren.

Die Protonen in der Struktur werden auch als Zwischengitterfehlstellen $(H_i^{\bullet})$ bezeichnet, obwohl sich ihre Positionen nicht auf ordnungsgemäßen Zwischengitterplätzen befinden, sondern in der Elektronenwolke des "Gast"-Oxidions.

In einem gemischt Protonen und Elektronen leitenden Material sind sowohl die Protonen als auch die Elektronen Ladungsträger und tragen so zur gesamten Leitfähigkeit des Materials bei. Die Gesamtleitfähigkeit $\sigma_{tot}$ setzt sich dabei aus den Beiträgen der Protonenleitfähigkeit $\sigma_{H+}$ und der elektronischen Leitfähigkeit $\sigma_e$ zusammen mit:

$$\sigma_{tot} = \sigma_{H+} + \sigma_{e-} \qquad \text{(Gl. 3)}$$

Die Gesamtleitfähigkeit des Materials kann ebenso wie die ionische Leitfähigkeit direkt gemessen werden. Die elektronische Leitfähigkeit kann somit rechnerisch durch Subtraktion der ionischen Leitfähigkeit von der Gesamtleitfähigkeit ermittelt werden.

Um die partiellen Leitfähigkeiten eines Materials zu beschreiben wird die so genannte Transportzahl t eingeführt. Diese Transportzahl kann für jeden Ladungsträger bestimmt werden. Die Transportzahlen für Protonen und Elektronen sind definiert als:

$$t_{H+} = \frac{\sigma_{H+}}{\sigma_{tot}} \quad \text{und} \quad t_{e-} = \frac{\sigma_{e-}}{\sigma_{tot}} \qquad \text{(Gl. 4)}$$

Die Leitfähigkeit von Protonen ist dabei proportional zu ihrer Ladung z, ihrer Konzentration c, ihrer Mobilität $\mu$ sowie zu ihrem Diffusionskoeffizienten D:

$$\sigma_{H^+} = zFc_{H^+}\mu_{H^+} = \frac{z^2Fc_{H^+}D_{H^+}}{kT} \qquad \text{(Gl. 5)}$$

Um der Elektroneutralitätsanforderung zu genügen müssen in dem Kristallgitter zusätzlich Elektronen oder Elektronenlöcher geschaffen werden. Elektronen und die Protonen wandern in dieselbe Richtung.

Die Durchlässigkeit (Permeation) von Wasserstoff durch eine dichte keramische Membran ist proportional zu der "ambivalenten" Leitfähigkeit, wobei anstelle der ionischen Leitfähigkeit $\sigma_i$ nunmehr die Protonenleitfähigkeit $\sigma_{H+}$ gesetzt wird. Damit kann die Flußdichte der Protonen durch eine Membran wie folgt dargestellt werden:

$$j_{H^+} = \frac{-RT}{2F^2L}\int_{I}^{II} \sigma_{H^+} t_e \, d\ln p_{H_2} \qquad \text{(Gl. 6)}$$

Aufgrund des Partialdruckgefälles über die MPEC-Membran bewegen sich die durch die Wasserstoffoxidationsreaktion erzeugten Protonen in der gleichen Richtung durch die Membran, wie die Protonen. Dabei kombinieren sie an der Seite der Membran, die den geringeren Partialdruck an Wasserstoff aufweist, zu Wasserstoff, $H_2$.

In den beiden vorgenannten Fällen, bewegen sich die Protonen innerhalb der Strukturen der Membran hauptsächlich durch Sprünge zwischen den stationären "Gast"-Oxidionen (Grotthuß Mechanismus). Der zweite Fall ist für die Betriebsweise einer MPEC-Membran wichtig.

Die Mehrheit der gegenwärtig untersuchten MPEC-Materialien besitzen die Perowskitstruktur ($ABO_3$), aber auch Fluorite ($AO_2$), Brownmillerite ($A_2B_2O_5$) oder Pyrochlore ($A_2B_2O_7$) werden derzeit untersucht. Bei den Perowskiten kommen dabei Zusammensetzungen der Form $A'A''BO_3$ als auch der Form $A_2B'B''O_6$ und $A_3B'B''O_9$ vor.

Beispiele für die chemischen Zusammensetzungen solcher komplexer Perowskite für verbesserten Sauerstofftransport sind $La_{1-x}Sr_xCo0_3$, $Nd_{1-x}Sr_xCo0_3$, $Nd_{1-x}Ca_xCo0_3$ oder $La_{1-x}Sr_xNi0_3$. Als Beispiele für MPEC-Materialien mit hohem Sauerstofffluss, aber geringer Stabilität, werden $La_{1-x}(Ca,Sr,Ba)_xCo_{1-y}Fe_yO_{3-\delta}$ und $Ba(Sr)Co_{1-x}Fe_xO_{3-d}$ in der Literatur genannt. Als MPEC-Materialien mit hoher Stabilität, aber niedrigem Sauerstofffluss, werden demgegenüber $Sr(Ba)Ti(Zr)_{1-x-y}Co_yF_{ex}O_{3-\delta}$ und $La_{1-x}Sr_xGa_{1-y}Fe_yO_{3-\delta}$ genannt.

Als am besten untersuchte für Hochtemperatureinsätze geeignete MPEC-Materialien mit einer Perowskitstruktur sind zudem zu nennen $SrCeO_3$, $BaCeO_3$, $SrZrO_3$. Cerate und Zirkonate sind als MPEC-Materialien derzeit Stand der Technik und zeigen die höchsten Protonenleitfähigkeiten in oxidischen Systemen.

Eine sehr gut untersuchte Klasse der gemischten Protonen- und Elektronenleiter umfasst die teilsubstituierten Perowskite, wie beispielsweise $CaZrO_3$, $SrCeO_3$ und $BaCeO_3$, bei denen die Substitution von Cer oder Zirkonium durch dreiwertige Kationen Sauerstofffehlstellen und andere Ladungsdefekte verursacht und so zu einer gemischten Leitfähigkeit in Gasmischungen führen, die Sauerstoff, Wasserstoff und Wasserdampf aufweisen. So sind aus US 2006/015767 A1 Membranen auf Perowskitbasis für die Wasserstoffabtrennung bekannt, die beispielsweise $BaCe_{0,9-x}Y_{0,1}Ru_xO_{3-a}$ oder $SrZr_{0,9-x}Y_{0,1}Ru_xO_{3-\alpha}$ oder $SrCe_{0,9-x}Ru_xO_{3-\alpha}$ mit jeweils mit x = 0,05 bis 0,8 umfassen.

Gemischtleitende Keramiken sind in den letzten Jahren schon intensiv auf Ihre Eignung als Membran für die Sauerstoffabtrennung untersucht worden. Daher war es naheliegend zu vermuten, dass dichte keramische Membranen

aus einem gemischten Protonen- und Elektronenleiter ebenfalls als einfaches und effektives Mittel für die Abtrennung von Wasserstoff aus Abgasen geeignet sein könnten.

Daher wurde neben den in der Perowskit-Struktur vorliegenden Materialien eine Vielzahl weiterer Materialklassen auf ihre Eignung als Gastrennmembran für eine $H_2$-Abtrennung untersucht. Unter ihnen finden sich Materialien mit einer Fluorit-, Pyrochlor-, Brownmillerit- oder auch Fergusonit-Struktur.

Für die Eignung als Membran für die Wasserstoffabtrennung ist es erforderlich, dass das Membranmaterial eine ausreichende Protonen- und Elektronenleitfähigkeit aufweist, um so eine hohe Permeabilität und Selektivität für Wasserstoff bereitzustellen. Zusätzlich sollte ein solches Material aber auch eine hohe katalytische Aktivität für die Oxidation und Entwicklung von Wasserstoff an der Grenzfläche fest/gasförmig aufweisen. Beispielsweise weisen dichte $BaCe_{0,8}Y_{0,2}O_3$ Keramiken eine hohe Wasserstoff-Permeationsrate auf.

Hochtemperatur-Membranen für die Abtrennung von Wasserstoff machen die Implementierung von Pre-Combustion Strategien in Kraftwerken möglich, so dass $CO_2$ und Wasserstoff nach der Shiftreaktion getrennt werden können, und so einen Abgasstrom aus feuchtem $CO_2$ erzeugen, der leicht verflüssigt und gelagert werden kann. Zudem können Wasserstoff-Membranen bei hohen Temperaturen in Wassergas-Shiftreaktoren, z. B. bei IGCC-Kraftwerken (= Integrated Gasification Combined Cycle), und Kohlenwasserstoff-Reformierungsreaktoren eingesetzt werden.

Hochtemperatur-Membranen für die Abtrennung von Wasserstoff basieren in der Regel auf zwei Arten von Membranen, einerseits den Wasserstoff durchlässigen Metallen, wie beispielsweise Palladium-Legierungen oder Nb/Ta/V, oder andererseits den gemischt Protonen und Elektronen leitenden Oxiden, die bei den hohen Temperaturen in einer Wasserstoffatmosphäre stabil sind. Typische Betriebsbedingungen umfassen Temperaturen zwischen 400 und 900 °C, Drücke zwischen 2 und 50 bar sowie eine Umgebung, die sehr hohe Konzentrationen an Wasser und $CO_2$, sowie auch geringen Konzentrationen an $H_2S$ (typischerweise 5 bis 200 ppm) aufweisen kann.

Die bislang bekannten Membranen für die Abtrennung von Wasserstoff mit Hilfe von Wasserstoff durchlässigen Metallen weisen jedoch einige Nachteile auf So ist die Betriebsführung in der Regel auf Temperaturen unterhalb von 450 °C begrenzt. Die metallischen Membranen sind, insbesondere beim Einsatz von Pd, nicht preiswert. Die chemische Beständigkeit der Metalle, vor allem gegenüber $H_2S$, was nachteilig zu thermodynamisch stabilen Sulfidverbindungen führt, ist gering. Andere Metalle, wie beispielsweise Nb, V oder Ta, oxidieren schon bei moderaten Temperaturen bis 300 °C bei Kontakt mit Sauerstoff.

Bei den bislang bekannten Membranen für die Abtrennung von Wasserstoff aus gemischt Protonen und Elektronen leitenden Oxiden (Cerate und Zirkonate) hat sich die besonders geringe chemische und mechanische Stabilität unter reduzierenden Bedingungen, wie sie beim Betrieb für die Wasserstoffabtrennung vorliegen, als nachteilig herausgestellt. Zudem bewirken der hohe Korngrenzenwiderstand und die hohen Herstellungstemperaturen ebenfalls eine Begrenzung in der praktischen Anwendung dieser Perowskite.

Das Ziel der Materialentwicklung bestand darin, durch Substitution der A und/oder B-Position in der Perowski-Struktur $ABO_3$ mit Kationen geringerer Wertigkeit Defektzentren für eine hohe Sauerstoffionen- und Elektronenleitung zu generieren.

Unter den verschiedenen Protonen leitenden Oxiden, die auch in $CO_2$ haltigen Atmosphären stabil bleiben, wurden von Shimura [1] und später auch von Haugsrud [2] Untersuchungen an $Ln_6WO_{12}$ mit Ln = La, Nd, Gd und Er durchgeführt. Für undotiertes $La_6WO_{12}$ wurde eine Protonenleitfähigkeit für feuchten Wasserstoff von maximal 3 bis $5*10^{-3}$ S/cm bei 850 °C und $5*10^{-3}$ S/cm bei 900 °C gemessen. Bei den ebenfalls untersuchten, mit Calzium dotierten Materialien ergab sich für niedrige Temperaturen bei den Systemen mit $Gd_6W_1O_{12}$ und $Er_6WO_{12}$ eine Erhöhung der ionischen Leitfähigkeit, allerdings nicht für reduzierende Bedingungen um 900 °C. Bei hohen Temperaturen und hohen Partialdrücken von Sauerstoff oder Wasserstoff dominiert für alle Materialien die elektronische Leitfähigkeit. Aus den Untersuchungen zeichnete sich der Trend ab, dass die Defekt Situation überwiegt, bei der die $Ca_{Ln}$-Akzeptoren durch Sauerstoff-Leerstellen und/oder Protonen Ladungskompensiert werden. Bei feuchtem Wasserstoff scheint unterhalb von 900 °C die elektronische Leitfähigkeit der limitierende Faktor zu sein, während oberhalb von 900 °C die elektronische Leitfähigkeit deutlich überwiegt, dafür aber die ionische Leitfähigkeit limitierend wirkt.

Alternativ zu dem Basismaterial $La_{5,8}WO_{11,7}$ wurden von Shimura [1] auch zwei auf dem A-Platz dotierte Materialien mit kleinerem Ionenradius als $La^{3+}$ untersucht, und zwar $(La_{0,93}Zr_{0,06})_{5,8}WO_{11,9}$ und $(La_{0,9}Nd_{0,1})_{5,8}WO_{11,7}$.

Während eine teilweise Substitution des Lanthans durch Ca zu einer Phasentrennung führte, lagen die Zr- oder Nd-dotierten Proben einphasig vor. Oberhalb von 800 °C zeigten die dotieren Materialien eine geringere elektrische Leitfähigkeit als das Basismaterial $La_{5,8}WO_{11,7}$.

Ferner wurde von Yoshimura et al. [3] die elektrische Leitfähigkeit des pseudo-binären Systems $CeO_2$-$La_6WO_{12}$ untersucht. Die maximale Leitfähigkeit wurde bei ca. 90 mol-% $CeO_2$ mit $1,1*10^{-3}$ S/cm bei 500 °C und mit $4,4*10^{-3}$ S/cm bei 600 °C ermittelt. Der geringste Wert für die Leitfähigkeit wurde bei einer Zusammensetzung mit 10 mol-% $CeO_2$ gefunden.

R. Hausgrud et al., "Effects of proton and acceptor substitution on the electrical conductivity of La6WO12", Journal of Physics and Chemistry of Solids, 69 (2008), p. 1758-1765 offenbart Materialien der Strukturformel $La_{1-x}W_{1/6}O_2$ (x=0, 0,005, 0,05; y= 0,05, 0,1).

R. Hausgrud, "Defects and transport properties in LnWO12 (Ln = La, Nd, Gd, Er), Solid State Ionics, 178 (2007), p. 555-560 offenbart ebenfalls A-Platz substituierte Perovskite der im Titel erwähnten Formel.

EP-A 048 613 offenbart Perovskit-Oxide der Formel $ABO_3$, wobei A = Ba, Ca, Mg oder Sr ist und B = $C_{1-x}M_x$, ist und M = Eu oder Tb ist, und deren Verwendung in Wasserstoff-Abtrennungsverfahren wie z.B. in Brennstoffzellen.

Aufgabe und Lösung

Die Aufgabe der Erfindung ist es, ein Material für eine Hochtemperaturmembran zur Abtrennung von Wasserstoff bereit zu stellen, welches zumindest einige der aufgeführten Nachteile aus dem Stand der Technik überwindet. Ferner ist es die Aufgabe der Erfindung, ein Herstellungsverfahren für ein solches Material zur Verfügung zu stellen.

Die Aufgaben der Erfindung werden gelöst durch ein Material gemäß Hauptanspruch und durch ein Herstellungsverfahren gemäß Nebenanspruch. Vorteilhafte Ausgestaltungen des Materials sowie des Herstellungsverfahrens sind den jeweils darauf rückbezogenen Ansprüchen zu entnehmen.

Beschreibung der Erfindung

Dichte oxidische Keramiken mit sowohl Sauerstoffionen- als auch Elektronenleitung werden als gemischt leitend bezeichnet (mixed protonic electronic conductor = MPEC). Ein MPEC-Material weist intrinsisch sowohl Ionen leitende, insbesondere Sauerstoffionen oder Protonen leitende Eigenschaften als auch Elektronen leitende Eigenschaften auf, welche sich typischerweise in der gleichen Größenordnung bewegen oder maximal um ca. eine Größenordnung unterscheiden.

Im Rahmen der Erfindung wurde ein oxidisches Material mit verbesserter gemischter Leitfähigkeit, verbesserter chemischer Stabilität sowie verbesserten Sintereigenschaften gefunden, welches insbesondere als Material für eine Wasserstoff abtrennende Membran bei höheren Temperaturen eingesetzt werden kann.

Das erfindungsgemäße Material basiert auf einem Material mit der Zusammensetzung $Ln_6WO_{12}$, mit Ln = (La, Pr, Nd, Sm) mit einer Defekt-Fluoritstruktur, bei dem durch eine definierte Substituierung der Kationen auf dem A und B-Platz oder nur auf dem B-Platz vorteilhafte Eigenschaften erhalten werden konnten.

Bei dem erfindungsgemäßen Material liegt das Lanthanidenmetall auf dem A-Platz teilweise durch wenigstens ein anderes Metall mit einem ähnlichen Ionenradius und einer Oxidationsstufe zwischen +2 und +4 ersetzt vor. Als Substitutionselemente sind neben den Metallen aus derselben Periode (La, Ce, Pr, Nd, Eu, Gd, Tb, Er, Yb) auch insbesondere geeignet Ca, Mg, Sr, Ba, Th, In oder Pb.

Zusätzlich oder ausschließlich ist das Wolframmetallkation auf dem B-Platz teilweise durch wenigstens ein anderes Metallelement mit einem ähnlichen Ionenradius und einer Oxidationsstufe zwischen +4 und +6 ersetzt.

Erfindungsgemäß weist das gemischt leitende Material die folgende Zusammensetzung (im wasserfreien Zustand) auf

$$(Ln_{1-x}\,Ax)_6(W_{1-y}B_y)_zO_{12-\delta}$$

mit

Ln = Element aus der Gruppe (La, Pr, Nd und Sm),
A = wenigstens ein Element aus der Gruppe (La, Ce, Pr, Nd, Eu, Gd, Tb, Er, Yb, Ca, Mg, Sr, Ba, Th, In, Pb),
B = wenigstens ein Element aus der Gruppe (Mo, Re, U, Cr, Mn, Nb),
$x = 0$ oder $x = 1$ und $0 < y < 0{,}5$,
und $1{,}00 \leq z \leq 1{,}25$ und $0 \leq \delta \leq 0{,}3$.

Je nach gewählter Zusammensetzung der Metallkationen im Material, d. h. der Substitution auf dem A- und B-Platz oder nur auf dem B-Platz kann sich für den Sauerstoff eine Stöchiometrieabweichung $\delta$ von bis zu 0,3 ergeben. Sofern eine Substitution auf dem A-oder B-Platz durch mehr als ein Kation erfolgt, gelten die Indizes x und y jeweils für die Summe an entsprechenden Substitutionselementen.

Alle erfindungsgemäßen Materialien weisen eine Einphasen-Struktur basierend auf einer Fluorit-Struktur auf Die Herstellung der erfindungsgemäßen Materialien kann dabei über verschiedene Wege erfolgen.

a) Komplexierung-Gelierung der Metallkationen in einer wässrigen Lösung mit organischem Lösungsmittel und abschließender Kalzination / Temperung in Luft bei Temperaturen zwischen 1100 °C und 1600 °C, je nach Material;
b) Einfrieren einer wässrigen Lösung umfassend die Metallkationen mit einem komplexbildenden Reaktionsmittel, Trocknung im Vakuum und abschließender Kalzination / Temperung in Luft bei Temperaturen zwischen 1100 °C und 1600 °C, je nach Material;

c) Vermischen von festen Vorstufen (Oxide, Karbonate, Azetate, etc.) der verschiedenen Metalle, gefolgt von einer thermischen Behandlung bei Temperaturen zwischen 1100 °C und 1600 °C, je nach Material;

d) Sprühtrocknung oder Elektrospray Ionisierung von stabilisierten flüssigen Lösungen, die die unterschiedlichen Metallkationen aufweisen, gefolgt von einer thermischen Behandlung bei Temperaturen zwischen 1100 °C und 1600 °C, je nach Material;

e) Ausfällung einer flüssigen Lösung, in der die unterschiedlichen Metallkationen gelöst vorliegen, Trocknung und abschließende Kalzination / Temperung in Luft bei Temperaturen zwischen 1100 °C und 1600 °C, je nach Material.

Gemäß Anspruch 1 wird bei dem erfindungsgemäßen Werkstoff x = 0 oder x = 1 zugelassen.

Besonders vorteilhafte Ausführungsformen des Werkstoffes weisen als Ln = Lanthan oder Neodym auf.

Erfindungsgemäß haben sich solche Materialien mit der allgemeinen Formel $Ln_6(W_{1-y}B_y)_zO_{12}-\delta$ als besonders geeignet herausgestellt. Hierbei handelt es sich um solche Ausführungsformen, bei denen eine Substituierung nur auf dem B-Platz vorliegt, d. h. x = 0 und y > 0 gewählt wird.

Ferner haben sich erfindungsgemäße Werkstoffe mit der allgemeinen Formel $Ln_5A(W_{1-y}B_y)_zO_{12-\delta}$ als vorteilhaft erwiesen. Hierbei handelt es sich um Ausführungsformen, bei denen eine Dotierung auf dem A-Platz mit einem Anteil von x = 1/6 und ferner eine Substitution des B-Platzes vorliegt.

Auch hier haben sich insbesondere die Werkstoffe als geeignet, die als Ln = Lanthan und oder Neodym aufweisen und zudem als A-Platz Substitution wiederum Lanthan aufweisen. Weitere vorteilhafte Zusammensetzungen sind dem speziellen Beschreibungsteil zu entnehmen, in dem auch die positiven Eigenschaften an Hand von Untersuchungsergebnissen näher verdeutlicht werden.

Obwohl in den meisten untersuchten Fällen bei der Herstellung der Werkstoffproben ein 10 % Überschuss an Wolfram, bzw. an B-Platz Kationen eingesetzt wurde, ist der erfindungsgemäße Werkstoff nicht darauf beschränkt. Der Überschuss bei der Herstellung soll lediglich die Einphasigkeit des Werkstoffes sicherstellen.

Die Verbesserung der Protonen-Leitfähigkeit bei den erfindungsgemäßen Werstoffen wird insbesondere dadurch erreicht, dass im Vergleich zu $Ln_6WO_{12}$ durch die vorgenannten Substitutionen auf dem A- und B-Platz oder nur auf dem B-Platz eine Veränderung in der Struktur, der Ionenanordnung oder der Anzahl, bzw. der Anordnung der Sauerstofffehlstellen erzielt wird. Diese Veränderungen beeinflussen unter üblichen Betriebsbedingungen in der Regel die Konzentration und die Stabilität, sowie die Mobilität der Protonen in dem oxidischen Material in hydriertem Zustand. Unter den üblichen Betriebsbedingungen, wie sie beispielsweise bei Simulationen für IGCC-Prozesse vorgesehen sind, ist zu verstehen: Temperaturen zwischen 400 und 1000 °C, Druck zwischen (0,1 und 5 MPa (1 und 50 bar), Wassergehalt zwischen 0,3 und 50 % sowie eine Atmosphäre umfassend 5 - 50 % $H_2$, 5 - 50 % $CO_2$ sowie 5 - 200 ppm $H_2S$.

Die Verbesserung der elektronischen Leitfähigkeit wird einerseits durch die veränderte Struktur, aber insbesondere dadurch erreicht, dass durch die Substituierung Kationen mit unterschiedlichen Oxidationsstufen eingebaut werden. Diese Kationen fügen sich zwar prinzipiell gut in die vorgegebene Struktur ein und können aber unter kontrollierten Bedingungen teilweise die Oxidationsstufe ändern, jedoch nicht bis zur völligen Reduktion bis zum Metall. Trotz dieser Veränderung in der Oxidationsstufe der substituierten Kationen kommt es dadurch nicht zu großen Strukturänderungen innerhalb des oxidischen Materials, d. h. keine großen Symmetrie- oder Strukturveränderungen oder hohe chemische Ausdehnung. Unter der chemischen Ausdehnung wird hier der Effekt verstanden, dass der Wechsel in der Oxidationsstufe der verschiedenen metallischen Kationen zu einem vergrößerter Ionenradius führen kann, der das Kristallgitter aufweitet. Dieser Effekt wird üblicherweise durch eine Temperaturänderung oder eine Änderungen der umgebenden Atmosphäre hervorgerufen. Die der Änderung der Oxidationsstufe zu Grunde liegende Oxidation, bzw. die Reduktion des Kations muss dabei reversibel verlaufen. Die Änderung in der Oxidationsstufe führt vorteilhaft zu einer Verringerung der Bandlücke, d. h. des energetischen Abstands zwischen Valenzband und Leitungs-band des Materials, und somit auch zu einer Erhöhung der elektronischen Leitfähigkeit.

Das vorgenannte erfindungsgemäße Material weist auf Grund seiner Eigenschaften besondere Vorzüge beim Einsatz als kristalline und gasdichte, Wasserstoff durchlässige Membran für die Abtrennung von Wasserstoff bei höheren Temperaturen, insbesondere in einem Kraftwerk, oder auch als Elektrolyt in einer SOFC-Brennstoffzelle auf. Besonders vorteilhafte Zusammensetzungen, wie beispielsweise das $Nd_6W_{0,6}Re_{0,5}O_{12-\delta}$, zeigen ihre Vorteile aber auch schon bei moderaten Temperaturen um 800 °C deutlich.

<u>Spezieller Beschreibungsteil</u>

Nachfolgend wird die Erfindung anhand einiger Versuchsdaten (Tabellen) und Figuren näher erläutert, ohne dass dadurch eine Einschränkung des Schutzbereiches erfolgen soll.

Die Figur 1 erläutert schematisch den Prozess der Wasserstoffabtrennung in einem Wassergas Shiftreaktor. Bei der Wassergas-Shift-Reaktion wird in einem Synthesegas der CO-Anteil minimiert und gleichzeitig der $H_2$-Anteil erhöht.

$$CO + H_2O \leftrightarrow CO_2 + H_2 \qquad \Delta H^0_{R298} = -41{,}2\ kJ/mol$$

Unter Zugabe von Wasserdampf reagiert das CO leicht exotherm zu $CO_2$ und $H_2$. Über eine selektive Membran, insbesondere über eine MPEP-Membran wird aus dem Gasgemisch kontinuierlich Wasserstoff abgetrennt und so die Reaktion auf die rechte Seite verschoben.

In der erfindungsgemäßen kristallisierten, gemischt Protonen und Elektronen leitenden Membran wird molekularer Wasserstoff auf der Wasserstoff-reichen Seite der Membran dissoziativ adsorbiert und tritt unter Elektronenabgabe als Proton in das Oxidmaterial der MPEC-Membran ein. Auf der Reaktionsseite, an der ein geringerer Wasserstoffpartialdruck vorherrscht, kombinieren die Protonen wieder zu molekularem Wasserstoff und werden in die Gasphase abgegeben.

A. Herstellung erfindungsgemäßer MPEC-Materialien über die Sol-Gel-Technik

Die hier angewandte Herstellungsmethode basiert auf einer abgewandelten Zitrat-Komplexbildung, zur Erzielung stabiler Wolfram- und Lanthan-haltiger Ionen in der Lösung. Die Lanthanoxoide (z. B. $Nd_20_3$, Reinheit 99,9%) werden in konzentrierter, heißer Salpetersäure (65 Vol-%.) in stöchiometrischen Mengen gelöst und das dadurch entstehende Nitrat wird mit Zitronensäure bei einem Molverhältnis von 1:2 (Kationenladung zu Zitronensäure) komplexiert. Eine weitere Lösung wird für die B-Platz Ionen (Reinheit > 99 5) hergestellt, wobei Ammoniumwolframat, Ammoniumheptamolybdat oder Uranylnitrat eingesetzt werden, und welche ebenfalls mit Zitronensäure (Fluka 99,5 %) bei demselben Molverhältnis komplexiert werden. Die Metallkomplexierung wird in beiden Fällen durch eine Wärmebehandlung 1 Stunde bei 120 °C verstärkt. Beide Lösungen werden anschließend durch kontrollierte Zugabe von Ammoniumhydroxid (32 Gew.-%) neutralisiert und bei Raumtemperatur (20 bis 25 °C) gemischt. Die so entstandene Lösung wird nach und nach durch stufenweises Erwärmen bis zu 150 °C unter Rühren aufkonzentriert und anschließend aufgeschäumt, d. h. polymerisiert und anschließend der entstandene Schaum getrocknet. Das auf diese Weise erzeugte Produkt wird nachfolgend in Luft kalziniert um Kohlenstoffverunreinigungen auszutreiben und die Kristallisation des gemischten Oxids zu begünstigen. Das kristallisierte Material wird auf 1150 oder 1350°C aufgeheizt.

Zu beachten ist noch, dass zur sicheren Erzielung der Phasenstabilität bei der Herstellung mit einem 10 % Überschuss an Wolfram gearbeitet wurde, dem im Folgenden dementsprechend durch den Parameter z berücksichtigt wird. Das Verhältnis der A-Platz Kationen zu den B-Platz Kationen wurde immer als 6:1,1 gewählt.

Auf diese Weise wurden beispielsweise die folgenden Materialien hergestellt.

Gruppe A (nicht erfindungsgemäß; Vergleichsbeispiele): mit Substitution auf dem A-Platz (allg. Formel: $Ln_5AW_{1,1}O_{12-\delta}$), mit x = 1/6, y = 0, z = 1,1 und mit Ln = La oder Nd und A = (La, Nd, Ce, Pr, Nd, Sm, Eu, Gd, Tb, Yb).

Im Besonderen:

$Nd_6W_{1,1}O_{12-\delta}$, $Nd_5LaW_{1,1}O_{12-\delta}$, $Nd_5CeW_{1,1}O_{12-\delta}$, $Nd_5PrW_{1,1}O_{12-}$
$Nd_5SmW_{1,1}O_{12-\delta}$, $Nd_5EuW_{1,1}O_{12-\delta}$, $Nd_5GdW_{1,1}O_{12-\delta}$, $Nd_5TbW_{1,1}O_{12-}$
$Nd_5YbW_{1,1}O_{12-\delta}$, $La_5EuW_{1,1}O_{12-\delta}$, $La_5CeW_{1,1}O_{12-\delta}$, und $La_5TbW_{1,1}O_{12-\delta}$.

Gruppe B: mit Substitution auf dem B-Platz (allg. Formel: $Ln_6(W_{1-y}B_y)_{1,1}O_{12-\delta}$), mit x = 0, y = 0,455 oder 0,091, z = 1,1, und mit Ln = La oder Nd und B = (Mo, Re, U, Cr, Nb).

Im Besonderen:

$Nd_6W_{1,1}Mo_{0,1}O_{12-\delta}$, $Nd_6W_{0,6}Mo_{0,5}O_{12-\delta}$, $Nd_6WRe_{0,1}O_{12-\delta}$, $Nd_6W_{0,6}Re_{0,5}O_{12-\delta}$,
$Nd_6WU_{0,1}O_{12-\delta}$, $Nd_6W_{0,6}U_{0,5}O_{12-\delta}$, $Nd_6WCr_{0,1}O_{12-\delta}$, $Nd_6W_{0,6}Cr_{0,5}O_{12-\delta}$,
$Nd_6WNb_{0,1}O_{12-\delta}$, $Nd_6W_{0,6}Nb_{0,5}O_{12-\delta}$, sowie
$La_6WMo_{0,1}O_{12-\delta}$, $La_6W_{0,6}Mo_{0,5}O_{12-\delta}$, $La_6WRe_{0,1}O_{12-\delta}$, $La_6W_{0,6}Re_{0,5}O_{12-\delta}$,
$La_6WU_{0,1}O_{12-\delta}$, $La_6W_{0,6}U_{0,5}O_{12-\delta}$, $La_6WCr_{0,1}O_{12-\delta}$, $La_6W_{0,6}Cr_{0,5}O_{12-\delta}$,
$La_6WNb_{0,1}O_{12-\delta}$ und $La_6W_{0,6}Nb_{0,5}O_{12-\delta}$.

Als dritte Gruppe wurden erfindungsgemäße Werkstoffe hergestellt, bei denen eine Substitution sowohl auf dem A-Platz, als auch auf dem B-Platz vorgenommen wurde (allg. Formel: $Ln_5A(W_{1-y}B_y)_{1,1}O_{12-\delta}$), mit x = 1/6, y = 0,455 oder 0,091, z = 1,1, und mit Ln = La und B = (Mo, Re, U, Cr, Nb).

Im Besonderen:.

$La_5NdWMo_{0,1}O_{12-\delta}$, $La_5NdW_{0,6}Mo_{0,5}O_{12-\delta}$, $La_5NdWRe_{0,1}O_{12-\delta}$,

(fortgesetzt)

| | | |
|---|---|---|
| $La_5NdW_{0,6}Re_{0,5}O_{12-\delta}$, | $La_5NdWU_{0,1}O_{12-\delta}$, | $La_5NdW_{0,6}U_{0,5}O_{12-\delta}$, |
| $La_5NdWCr_{0,1}O_{12-\delta}$, | $La_5NdW_{0,6}Cr_{0,5}O_{12-\delta}$, | $La_5NdWNb_{0,1}O_{12-\delta}$, |
| $La_5NdW_{0,6}Nb_{0,5}O_{12-\delta}$, | $La_5CeWMo_{0,1}O_{12-\delta}$, | $La_5CeW_{0,6}Mo_{0,5}O_{12-\delta}$, |
| $La_5CeWRe_{0,1}O_{12-\delta}$, | $La_5CeW_{0,6}Re_{0,5}O_{12-\delta}$, | $La_5CeWU_{0,1}O_{12-\delta}$, |
| $La_5CeW_{0,6}U_{0,5}O_{12-\delta}$, | $La_5CeWCr_{0,1}O_{12-\delta}$, | $La_5CeW_{0,6}Cr_{0,5}O_{12-\delta}$, |
| $La_5CeWNb_{0,1}O_{12-\delta}$, | $La_5CeW_{0,6}Nb_{0,5}O_{12-\delta}$, | $La_5GdWMo_{0,1}O_{12-\delta}$, |
| $La_5GdW_{0,6}Mo_{0,5}O_{12-\delta}$, | $La_5GdWRe_{0,1}O_{12-\delta}$, | $La_5GdW_{0,6}Re_{0,5}O_{12-\delta}$, |
| $La_5GdWU_{0,1}O_{12-\delta}$, | $La_5GdW_{0,6}U_{0,5}O_{12-\delta}$, | $La_5GdWCr_{0,1}O_{12-\delta}$, |
| $La_5GdW_{0,6}Cr_{0,5}O_{12-\delta}$, | $La_5GdWNb_{0,1}O_{12-\delta}$, und | $La_5GdW_{0,6}Nb_{0,5}O_{12-\delta}$. |

Zudem wurden als Vergleich stabförmige Proben aus $Ln_6W_{1,1}O_{1-\delta}$ Material, mit Ln = La oder Nd, welches für 10 Minuten bei 900 °C kalziniert und bei 100 MPa monoaxial gepresst wurde, hergestellt. Die Ausmaße im Grünzustand betrugen 40 x 5 x 4 $mm^3$. Die stabförmigen Proben wurden in Luft für 4 Stunden entweder bei 1150 °C oder bei 1350 °C gesintert.

B. Untersuchungen der Struktur

Mit Hilfe von XRD-Messungen kann die Struktur von Materialien untersucht werden. Die Messungen wurden mit einem Röntgendiffraktometersystem der Firma PANalytical durchgeführt. Das X'Pert Pro System in Verbindung mit dem Hochgeschwindigkeitsdetektor X'Celerator wird mit einer Kupfer-Röntgenröhre zur Erzeugung monochromatischer Cu-Strahlung betrieben. Die XRD Muster wurden in dem 2Teta Bereich zwischen 20° bis 90° aufgenommen und mit Hilfe der X'Pert Highscore Plus Software (PANalytical) analysiert.

Sofern die Materialien auf unterschiedliche Temperaturen erhitzt werden, können durch Vergleich der Ergebnisse Änderungen in der Struktur aufgrund der Temperatur erkenntlich gemacht werden. Die Figuren 2a bis 2i und die Figuren 3a bis 3d zeigen die Ergebnisse der Strukturuntersuchungen.

Die untersuchten Materialien der vorgenannten Gruppe A und B zeigen eine Fluorit-Struktur (Figuren 2 und 3). Dies deutet auf die Bildung einer Protonen leitenden Phase und den Einbau der dotierenden Elemente (A2 und B2) in das Oxidgitter hin.

Über einen gleichzeitigen Einbau zweier oder mehr A-Platzelemente und/oder zweier oder mehr B-Platzelemente in die generische Verbindung $A_6BO_{12}$ ist bislang, bis auf die Verbindung $La_{6-x}Zr_xW0_{12}$ aus [1], noch nicht in der Literatur berichtet worden.

C. Untersuchung der Leitfähigkeit

Die Bestimmung der elektrischen Leitfähigkeit erfolgte standardmäßig über die 4-Spitzen-Methode an den gesinterten rechteckigen Proben. Als Kontaktmittel wurden Silberpaste und Silberdraht verwendet. Die Messungen erfolgten bei unterschiedlichen atmosphärischen Bedingungen, wie beispielsweise unter Argon und Wasserstoff, jeweils bei 20 °C und mit Wasser gesättigt. Der konstante Strom wurde mit Hilfe einer programmierbaren Stromquelle (Keithley 2601) zur Verfügung gestellt, während der Spannungsabfall über die Probe mit Hilfe eines Multimeter (Keithley 3706) detektiert wurde. Um thermische Effekte auszuschließen und um Nichtohmige Antworten zu vermeiden, wurde die Spannung zusammen mit dem Strom in beide Richtungen vorwärts und rückwärts gemessen.

Die Ergebnisse der Leitfähigkeituntersuchungen an den verschiedenen Materialien der vorgenannten A- und B-Gruppen sind den Figuren 4a bis 4i und 5a bis 5g zu entnehmen. Sie zeigen die Verbesserung der Gesamtleitfähigkeit der erfindungsgemäßen Materialien in feuchter Argon- und Wasserstoffatmosphäre im Vergleich zu der undotierten Probe aus $Nd_6W_{1,1}O_{12}$.

Zur Verdeutlichung werden nachfolgend die elektrischen Leitfähigkeiten der untersuchten Proben bei 800 °C in feuchter und trockener Atmosphäre zusätzlich auch tabellarisch aufgeführt. Auch diese Proben wurden bei 1350 °C gesintert.

Tabelle 1: Kombinierte Ionen- und Elektronenleitfähigkeitsmessungen an A-Platz substituierten Materialien (allg. Formel: $Nd_5AW_{1,1}O_{12-\delta}$) (aus Figur 4) (Vergleichsbeispiele, nicht erfindungsgemäß)

| A = | Argon - 800 °C (feucht) | Aktivierungsenergie | $H_2$ - 800 °C (feucht) | Aktivierungsenergie |
|---|---|---|---|---|
| | * $10^{-4}$ [S.cm$^{-1}$] | $E_{act}$ [kJ/mol] | * $10^{-4}$ [S.cm$^{-1}$] | $E_{act}$ [kJ/mol] |
| Nd | 2,90 | 57,9 | 2,00 | 115,8 |
| Ce | 1,45 | 116,4 | 167 | 75,6 |
| Eu | 0,20 | 77,2 | 3,22 | 111,9 |
| Gd | 1,22 | 65,6 | 1,18 | 99,2 |
| La | 7,03 | 47,3 | 3,06 | 86,5 |
| Pr | 4,89 | 66,4 | 4,11 | 81,6 |
| Sm | 1,40 | 62,8 | 1,73 | 111,7 |
| Yb | 1,82 | 62,7 | 2,14 | 107,0 |

Tabelle 2: Kombinierte Ionen- und Elektronenleitfähigkeitsmessungen an B-Platz substituierten Materialien (allg. Formel: $Nd_6(W_{1-y}B_y)_{1,1}O_{12-\delta}$) (aus Figur 5)

| | Argon - 800 °C (feucht) | $H_2$ - 800 °C (feucht) |
|---|---|---|
| | * $10^{-4}$ [S cm$^{-1}$] | * $10^{-4}$ [S cm$^{-1}$] |
| $Nd_6(W_{0,9}Re_{0,1})_{1,1}O_{12-\delta}$ | 2,8 | 6,6 |
| $Nd_6(W_{0,5}Re_{0,5})_{1,1}O_{12-\delta}$ | 24 | 93 |
| $Nd_6(W_{0,5}U_{0,5})_{1,1}O_{12-\delta}$ | 0,61 | 4,7 |
| $Nd_6(W_{0,9}U_{0,1})_{1,1}O_{12-\delta}$ | 9,8 | 7,2 |
| $Nd_6(W_{0,5}Mo_{0,5})_{1,1}O_{12-\delta}$ | 2,8 | 220 |
| $Nd_6(W_{0,9}Mo_{0,1})_{1,1}O_{12-\delta}$ | 3,3 | 3,4 |

D. Durchlässigkeitsuntersuchungen

Messungen zur Durchlässigkeit wurden an Hand von Probenscheiben mit einem Durchmesser von 15 mm durchgeführt. Die Proben bestanden dabei jeweils aus einer gasdichten 900 μm dicken Werkstoffscheibe, die bei 1550 °C gesintert wurden. Beide Seiten der Scheiben wurden mit Hilfe des Siebdrucks mit einer 20 μm dicken Schicht aus Pt-Tinte (Mateck, Deutschland) beschichtet, mit dem Ziel den oberflächigen Wasserstoffaustausch zu verbessern. Die Abdichtungen erfolgten mit Hilfe von goldenen O-Ringen. Der Wasserstoff wurde aus einer mit Wasser bei Raumtemperatur (T = 25 °C) gesättigten Gasmischung ($p_{H2O}$ = 2,5 kPa (0,025 atm)) aus $H_2$-He im Molverhältnis 1:1 oder 1:5 abgetrennt. Der gesamte kontinuierliche Gasfluss der Gasmischung betrug 120 mL/min und der des Spülgases Argon 180 mL/min.

Der Wasserstoffgehalt im Spülgas auf der Permeatseite der Membran wurde mit Hilfe eines Gaschromatographen (Varian CP-4900 microGC mit Molsieve5A, PoraPlot-Q Glaskapillare und CP-Sil Module) analysiert. Zusammen mit dem Gasfluss des Spülgases kann so unter der Annahme des idealen Gasgesetzes die Wasserstoff-Durchflussrate bestimmt werden.

Die Durchlässigkeitsergebnisse zeigten eine höhere Permeabilität der A-Platz-substituierten Werkstoffe $Nd_5EuW_{1,1}O_{12-\delta}$ in Vergleich zum $Nd_6W_{1,1}O_{12}$.

Ein Vergleich der Untersuchungen für die Durchlässigkeit für feuchtes $H_2$ bei einer Testmembran aus einem A-Platz substituierten Werkstoff ($Nd_5LaW_{1,1}O_{12-\delta}$) (nicht erfindungsgemäß) und einem auf dem B-Platz substituierten Werkstoff ($Nd_6W_{0,6}Re_{0,5}O_{12-\delta}$) mit einer Testmembran umfassend $Nd_6W_{1,1}O_{12-\delta}$ ist in der folgenden Tabelle dargestellt (aus Figur 6a mit 20 % $H_2$-Mischung und aus 6b mit 50 % $H_2$-Mischung).

Tabelle 3:

| | J $H_2$ [ml $min^{-1}$ $cm^{-2}$] | | | | | |
|---|---|---|---|---|---|---|
| Temperatur [°C] | $Nd_6W_{1,1}O_{12-\delta}$ (Vergleich) | | $Nd_5LaW_{1,1}O_{12-\delta}$ (Vergleich) | | $Nd_6W_{0,6}Re_{0,5}O_{12-\delta}$ | |
| | 20 % $H_2$ | 50 % $H_2$ | 20 % $H_2$ | 50 % $H_2$ | 20 % $H_2$ | 50 % $H_2$ |
| 1000 | 0,0240 | 0,0292 | 0,0375 | 0,0468 | 0,0608 | 0,0802 |
| 950 | 0,0153 | 0,0191 | 0,0200 | 0,0243 | 0,0499 | 0,0642 |
| 900 | 0,0105 | 0,0119 | 0,0105 | 0,0134 | 0,0350 | 0,0459 |
| 850 | 0,004 | 0,007 | 0,00683 | 0,00704 | 0,02686 | 0,03325 |
| 800 | 0,003 | 0,005 | 0,00442 | 0,00467 | 0,01392 | 0,01752 |

Der auf dem B-Platz substituierte Werkstoff $Nd_6W_{0,6}Re_{0,5}O_{12-\delta}$ zeigt derzeit die besten Durchlässigkeitwerte für Wasserstoff (siehe Tabelle 3), und ist somit besonders vorteilhaft für den Einsatz als gemischt Protonen und Elektronen leitende Membran in einem Pre-Combustion Kraftwerk geeignet. Er zeigt neben der guten Wasserstoffdurchlässigkeit eine hohe gemischte Leitfähigkeit und zeichnet sich durch eine gute chemische Beständigkeit gegenüber agressiven Atmosphären sowie durch eine gute Langlebigkeit aus. Besonders hervorzuheben ist, dass diese Eigenschaften bei diesem Werkstoff auch schon bei moderaten Temperaturen um 800 °C vorliegen. So beträgt beispielsweise der Wasserstofffluss durch eine Membran aus $Nd_6W_{0,6}Re_{0,5}O_{12-\delta}$ (B-Platzsubstitiution) auch bei 800 °C schon das 3 bis 4-fache im Vergleich zu einer Membran aus $Nd_6W_{1,1}O_{12-\delta}$ (ebenfalls B-Platz substituiert).

<u>In der Anmeldung zitierte Literatur:</u>

[1] Shimura T., Fujimoto S., Iwahara H., Solid State Ionics 2001, 143 (1), 117-123.
[2] Haugsrud R, Solid State Ionics 2007, 178, Seiten 555-560.
[3] Yoshimura M., Baumard, J. F., Materials Research Bulletin, Volume 10, Issue 9, September 1975, Seiten 983-988.

## Patentansprüche

**1.** Gemischt Protonen und Elektronen leitender Werkstoff, welcher in einer Defekt-Fluoritstruktur vorliegt und im wasserfreien Zustand die folgende Zusammensetzung aufweist:

$$(Ln_{1-x}\,A_x)_6(W_{1-y}B_y)_zO_{12-\delta}$$

mit

Ln = ein Element aus der Gruppe (La, Pr, Nd, Sm),
A = wenigstens ein Element aus der Gruppe
(La, Ce, Pr, Nd, Eu, Gd, Tb, Er, Yb, Ca, Mg, Sr, Ba, Th, In, Pb),
B = wenigstens ein Element aus der Gruppe (Mo, Re, U, Cr, Mn, Nb),
$0 < y \leq 0.5$, und x = 0 oder x = 1/6
$1.00 \leq z \leq 1.25$ und $0 \leq d \leq 0.3$.

**2.** Gemischt Protonen und Elektronen leitender Werkstoff nach Anspruch 1 mit der Zusammensetzung $Ln_6(W_{1-y}B_y)_zO_{12-\delta}$.

**3.** Gemischt Protonen und Elektronen leitender Werkstoff nach Anspruch 2, mit der Zusammensetzung $Ln_6WB_{0.1}O_{12-\delta}$ or $Ln_6W_{0.6}B_{0.5}O_{12-\delta}$.

**4.** Gemischt Protonen und Elektronen leitender Werkstoff nach Anspruch 2, wobei $Ln_6(W_{1-y}B_y)_{1.1}O_{12-\delta}$.

**5.** Gemischt Protonen und Elektronen leitender Werkstoff nach Anspruch 2, mit Ln = La or Nd.

**6.** Gemischt Protonen und Elektronen leitender Werkstoff nach Anspruch 2, mit B = wenigstens eine Element aus der Gruppe (Mo, Re, U, Cr, Nb).

**7.** Gemischt Protonen und Elektronen leitender Werkstoff nach Anspruch 2 bis 6 mit der Zusammensetzung:

$Nd_6WMo_{0.1}O_{12-\delta}$, $Nd_6W_{0.6}Mo_{0.5}O_{12-\delta}$, $Nd_6WRe_{0.1}O_{12-\delta}$, $Nd_6W_{0.6}Re_{0.5}O_{12-\delta}$, $Nd_6WU_{0.1}O_{12-\delta}$, $Nd_6W_{0.6}U_{0.5}O12\text{-}\delta$, $Nd_6WCr_{0.1}O_{12-\delta}$, $Nd_6W_{0.6}Cr_{0\cdot5}O_{12-\delta}$, $Nd_6WNb_{0.1}O_{12-\delta}$, $Nd_6W_{0.6}Nb_{0.5}O_{12-\delta}$, $La_6WMo_{0.1}O_{12-\delta}$, $La_6W_{0.6}Mo_{0.5}O_{12-\delta}$, $La_6WRe_{0.1}O_{12-\delta,}$ $La_6W_{0.6}Re_{0.5}O_{12-\delta}$, $La_6WU_{0.1}O_{12-\delta}$, $La_6W_{0.6}U_{0.5}O_{12-\delta}$, $La_6WCr_{0.1}O_{12-\delta}$, $La_6W_{0.6}Cr_{0.5}O_{12-\delta}$, $La_6WNb_{0.1}O_{12-\delta}$ oder $La_6W_{0.6}Nb_{0.5}O_{12-\delta}$.

**8.** Gasdichte, Wasserstoff permeable Membran, umfassend einen gemischt Protonen und Elektronen leitenden Werkstoff gemäß einem der Ansprüche 1 bis 7, zur Abtrennung von Wasserstoff aus einer Gasmischung.

**9.** Elektrolyt für eine Hochtemperatur-Brennstoffzelle, umfassend einen gemischt Protonen und Elektronen leitenden Werkstoff gemäß einem der Ansprüche 1 bis 8.

## Claims

**1.** A mixed proton-electron conducting material, which is present in a defect fluorite structure and in the water-free state has the following composition:

$$(Ln_{1-x}\,A_x)_6(W_{1-y}B_y)_zO_{12-\delta}$$

where

Ln = an element from the group (La, Pr, Nd, Sm),
A = at least one element from the group
(La, Ce, Pr, Nd, Eu, Gd, Tb, Er, Yb, Ca, Mg, Sr, Ba, Th, In, Pb),
B = at least one element from the group (Mo, Re, U, Cr, Mn, Nb),
$0 < y \leq 0.5$ and $x = 0$ or $x = 1/6$,
$1.00 \leq z \leq 1.25$ and $0 \leq d \leq 0.3$.

**2.** The mixed proton-electron conducting material according to claim 1, with the composition $Ln_6(W_{1-y}B_y)_zO_{12-\delta}$.

**3.** The mixed proton-electron conducting material according to claim 2, with the composition $Ln_6WB_{0.1}O_{12-\delta}$ or $Ln_6W_{0\cdot6}B_{0\cdot5}O_{12-\delta}$.

**4.** The mixed proton-electron conducting material according to claim 2, with the composition $Ln_6(W_{1-y}B_y)_{1.1}O_{12-\delta}$.

**5.** The mixed proton-electron conducting material according to claim 2, where Ln = La or Nd.

**6.** The mixed proton-electron conducting material according to claim 2, where B = at least one element from the group (Mo, Re, U, Cr, Nb).

**7.** The mixed proton-electron conducting material according to any one of the preceding claims 2 bis 6 with the composition:

$Nd_6WMo_{0.1}O_{12-\delta}$, $Nd_6W_{0.6}Mo_{0.5}O_{12-\delta}$, $Nd_6WRe_{0.1}O_{12-\delta}$, $Nd_6W_{0.6}Re_{0.5}O_{12-\delta}$, $Nd_6WU_{0.1}O_{12-\delta}$, $Nd_6W_{0.6}U_{0.5}O_{12-\delta}$, $Nd_6WCr_{0.1}O_{12-\delta}$, $Nd_6W_{0.6}Cr_{0.5}O_{12-\delta}$, $Nd_6WNb_{0.1}O_{12-\delta}$, $Nd_6W_{0\cdot6}Nb_{0\cdot5}O_{12-\delta}$, $La_6WMo_{0.1}O_{12-\delta}$, $La_6W_{0.6}Mo_{0.5}O_{12-\delta}$, $La_6WRe_{0.1}W_{12-\delta}$, $La_6W_{0.6}Re_{0.5}O_{12-\delta}$, $La_6WU_{0.1}O_{12-\delta}$, $La_6W_{0.6}U_{0.5}O_{12-\delta}$, $La_6WCr_{0.1}O_{12-\delta}$, $La_6W_{0.6}Cr_{0.5}O_{12-\delta}$,

(continued)

$La_6WNb_{0.1}O_{12-\delta}$ oder $La_6W_{0.6}Nb_{0.5}O_{12-\delta}$.

8. A gas-tight, hydrogen-permeable membrane, comprising a mixed proton-electron conducting material according to any one of the claims 1 to 7, for the separation of hydrogen from a gas mixture.

9. An electrolyte for a high-temperature fuel cell, comprising a mixed proton-electron conducting material according to any one of the claims 1 to 8.

## Revendications

1. Matériau conducteur mixte de protons et d'électrons qui est présent en forme d'une structure de défauts fluoritique et, à l'état anhydre, ayant la composition suivante :

$$(Ln_{1-x}A_x)_6(W_{1-y}B_y)_zO_{12-\delta}$$

dans laquelle

Ln = un élément sélectionné parmi le groupe consistant en (La, Pr, Nd, Sm),
A = au moins un élément sélectionné parmi le groupe consistant en
(La, Ce, Pr, Nd, Eu, Gd, Tb, Er, Yb, Ca, Mg, Sr, Ba, Th, In, Pb),
B = au moins un élément sélectionné parmi le groupe consistant en (Mo, Re, U, Cr, Mn, Nb),
$0 < y \leq 0,5$ et $x = 0$ ou $x = 1/6$
$1,00 \leq z \leq 1,25$ et $0 \leq d \leq 0,3$.

2. Matériau conducteur mixte de protons et d'électrons selon la revendication 1, ayant la composition $Ln_6(W_{1-y}B_y)_zO_{12-\delta}$.

3. Matériau conducteur mixte de protons et d'électrons selon la revendication 2, ayant la composition $Ln_6WB_{0,1}O_{12-\delta}$ ou $Ln_6W_{0,6}B_{0,5}O_{12-\delta}$.

4. Matériau conducteur mixte de protons et d'électrons selon la revendication 2, dans lequel $Ln_6(W_{1-y}B_y)_{1,1}O_{12-\delta}$.

5. Matériau conducteur mixte de protons et d'électrons selon la revendication 2, avec Ln = La ou Nd.

6. Matériau conducteur mixte de protons et d'électrons selon la revendication 2, avec B = au moins un élément sélectionné parmi le groupe consistant en (Mo, Re, U, Cr, Nb).

7. Matériau conducteur mixte de protons et d'électrons selon la revendication 2 à 6 ayant la composition :

$Nd_6WMo_{0.1}O_{12-\delta}$, $Nd_6W_{0.6}Mo_{0.5}O_{12-\delta}$, $Nd_6WRe_{0.1}O_{12-\delta}$,
$Nd_6W_{0.6}Re_{0.5}O_{12-\delta}$, $Nd_6WU_{0.1}O_{12-\delta}$, $Nd_6W_{0.6}U_{0.5}O_{12-\delta}$,
$Nd_6WCr_{0.1}O_{12-\delta}$, $Nd_6W_{0.6}Cr_{0.5}O_{12-\delta}$, $Nd_6WNb_{0.1}O_{12-\delta}$,
$Nd_6W_{0.6}Nb_{0.5}O_{12-\delta}$, $La_6WMo_{0.1}O_{12-\delta}$, $La_6W_{0.6}Mo_{0.5}O_{12-\delta}$,
$La_6WRe_{0.1}O_{12-\delta}$, $La_6W_{0.6}Re_{0.5}O_{12-\delta}$, $La_6WU_{0.1}O_{12-\delta}$,
$La_6W_{0.6}U_{0.5}O_{12-\delta}$, $La_6WCr_{0.1}O_{12-\delta}$, $La_6W_{0.6}Cr_{0.1}O_{12-\delta}$,
$La_6WNb_{0.1}O_{12-\delta}$ ou $La_6W_{0.6}Nb_{0.5}O_{12-\delta}$.

8. Membrane étanche aux gaz, perméable à l'hydrogène, comprenant un matériau conducteur mixte de protons et d'électrons selon l'une des revendications 1 à 7 pour la séparation de l'hydrogène d'un mélange de gaz.

9. Electrolyte pour une pile à combustible à haute température comprenant un matériau conducteur mixte de protons et d'électrons selon l'une des revendications 1 à 8.

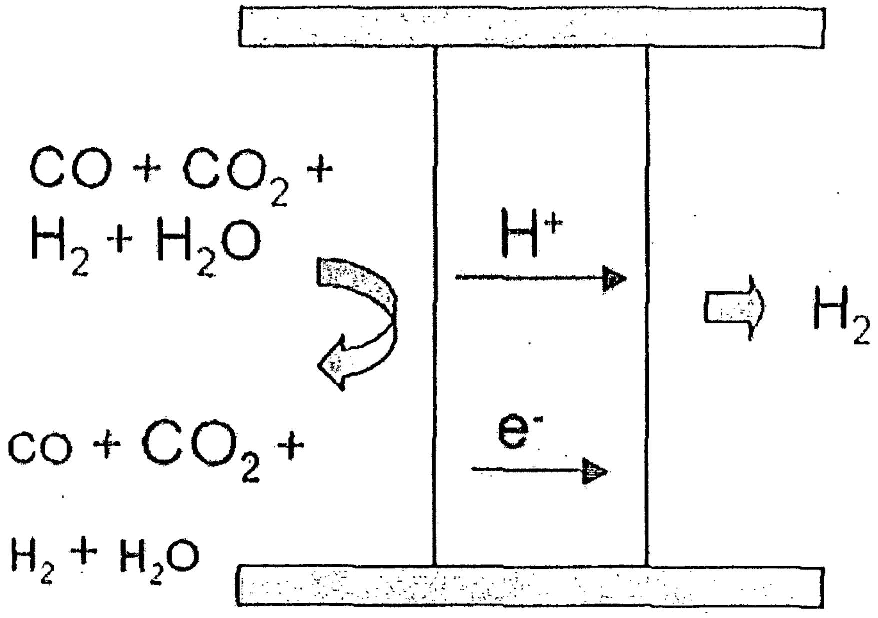


**Figur 1**

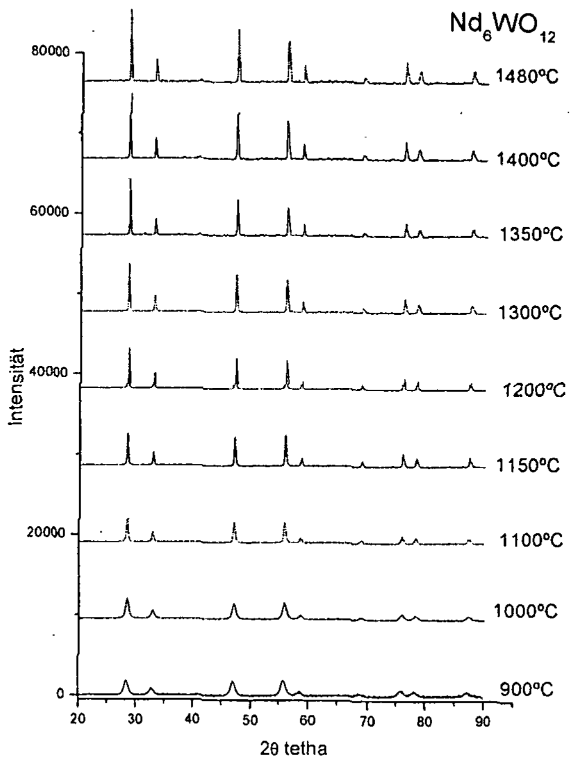


**Figur 2a**

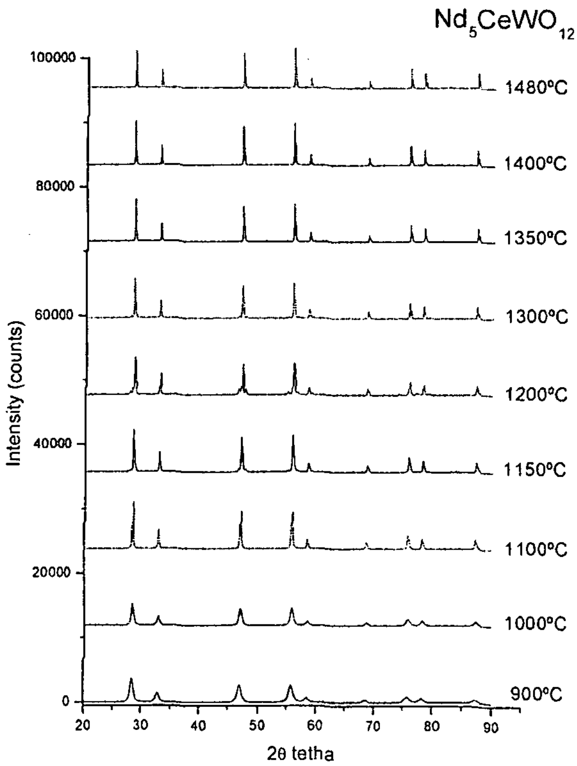


**Figur 2b**

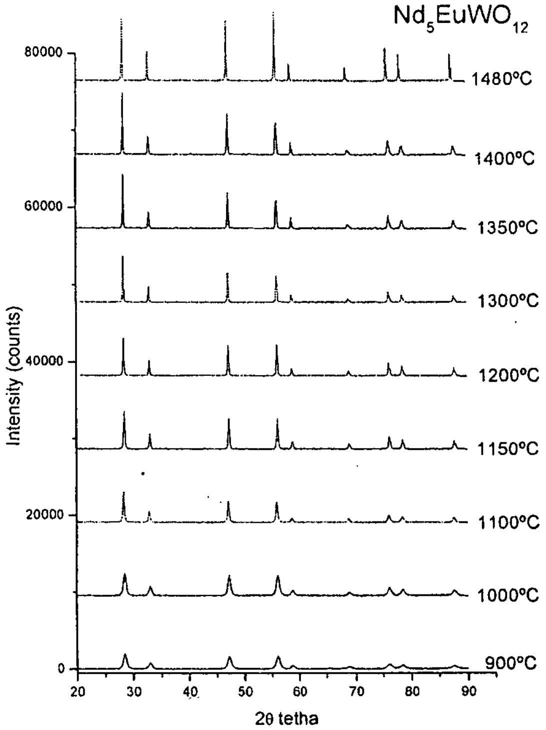


Figur 2c

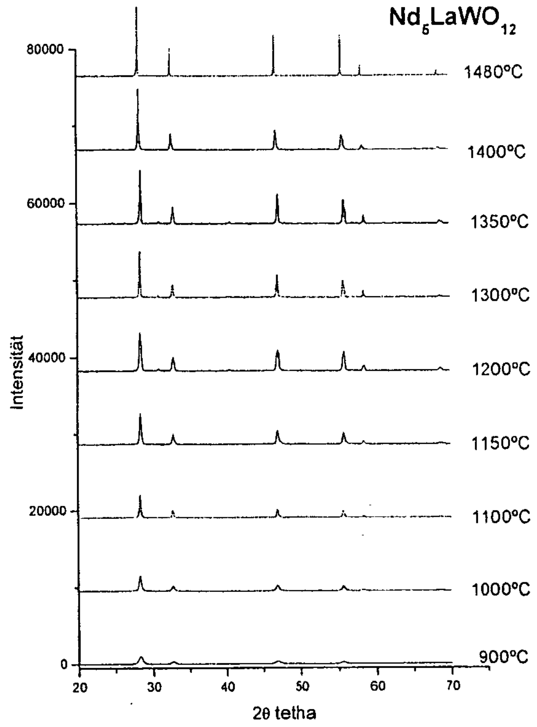


Figur 2d

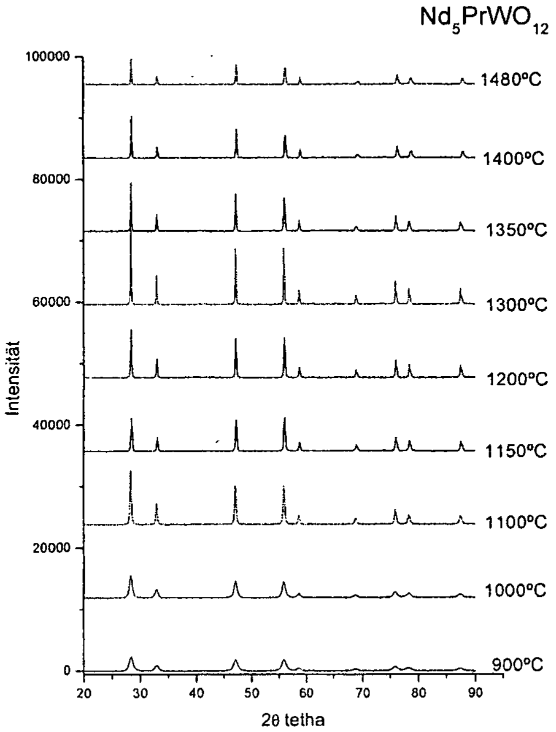


Figur 2e

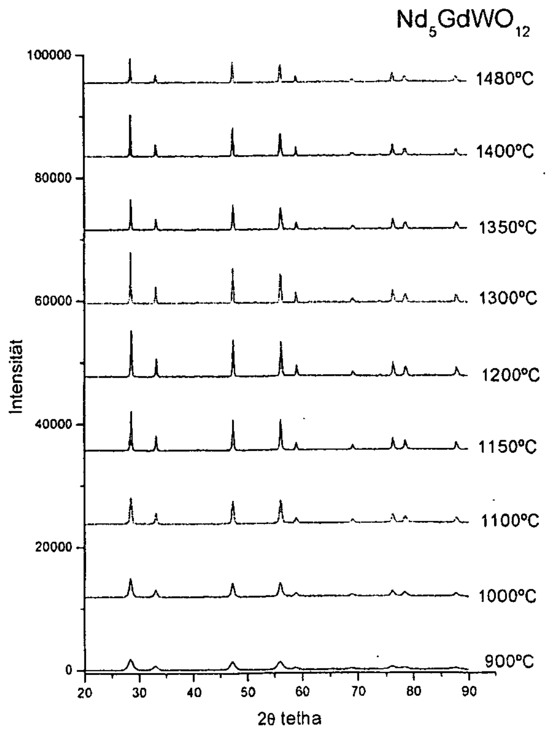


Figur 2f

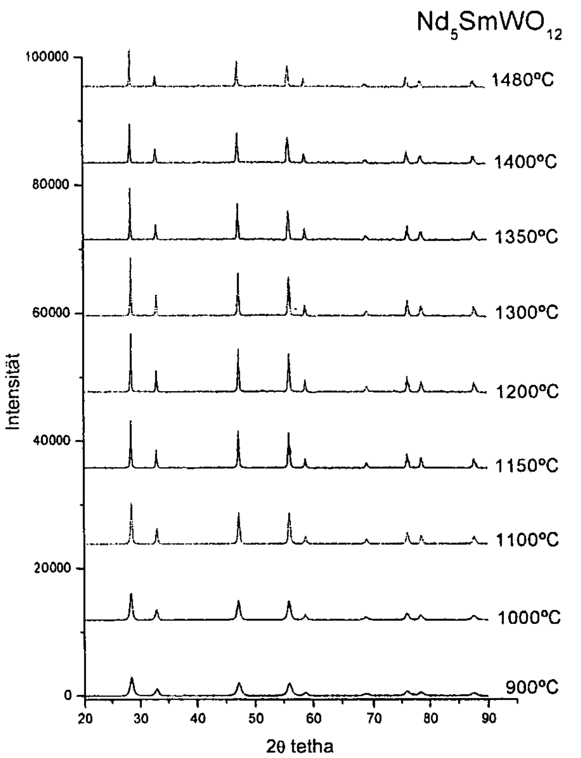


Figur 2g

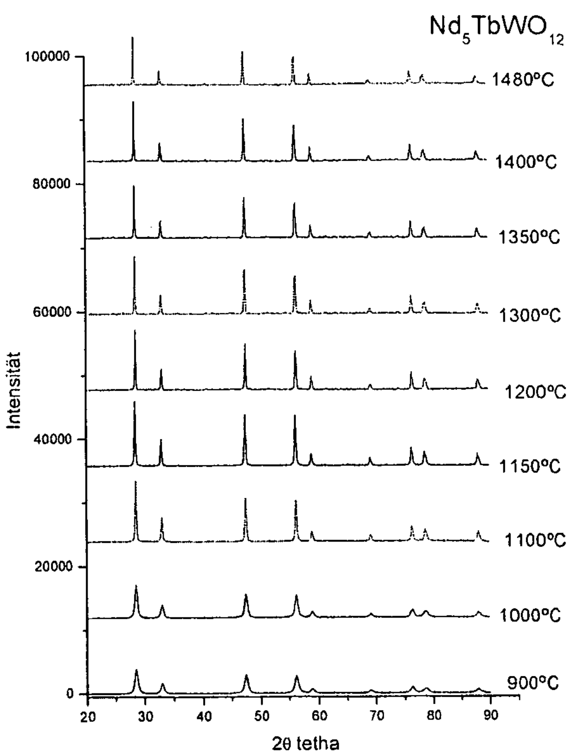


Figur 2h

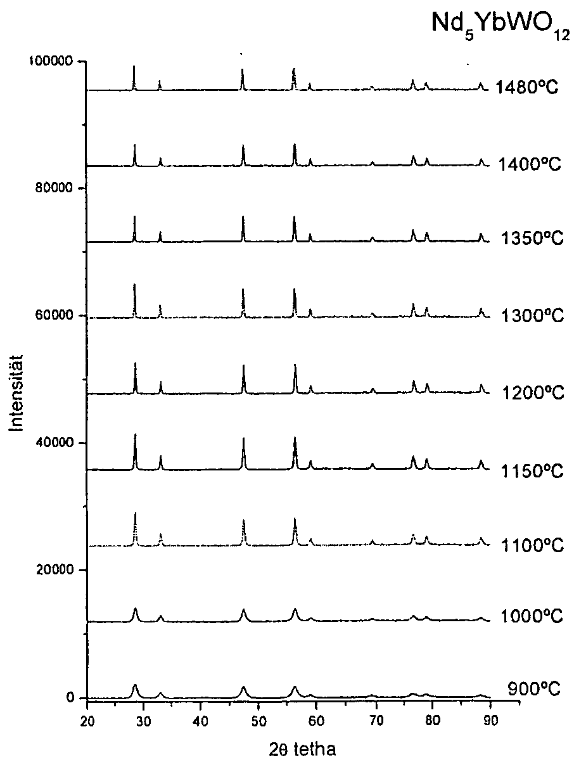


Figur 2i

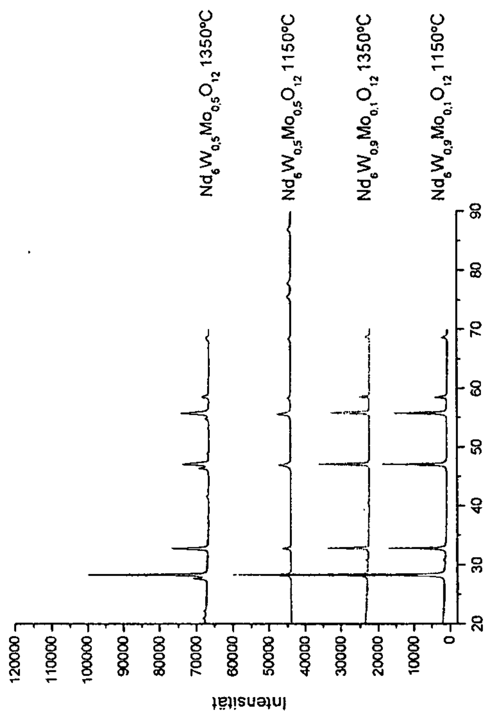


Figur 3a

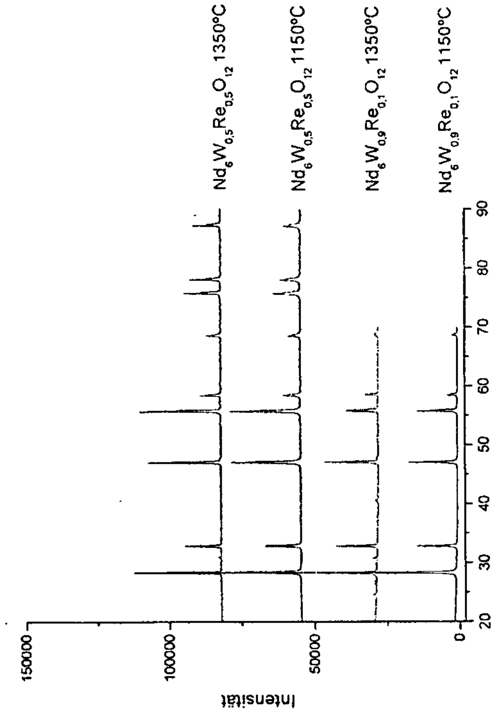


Figur 3b

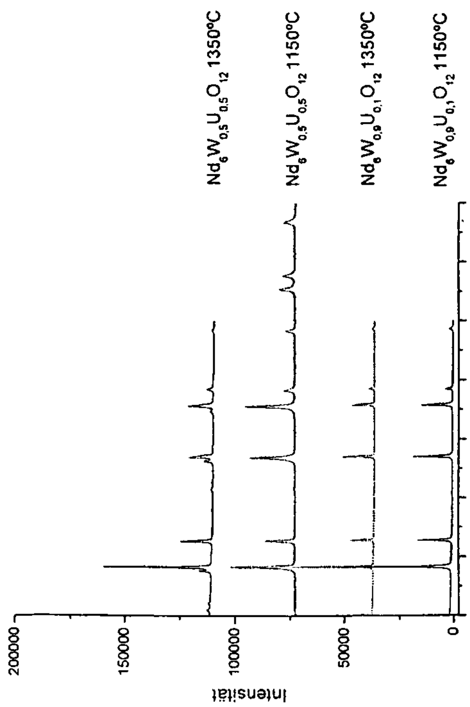


Figur 3c

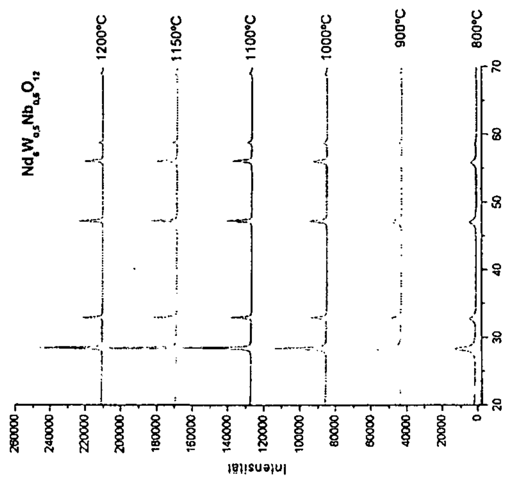


Figur 3d

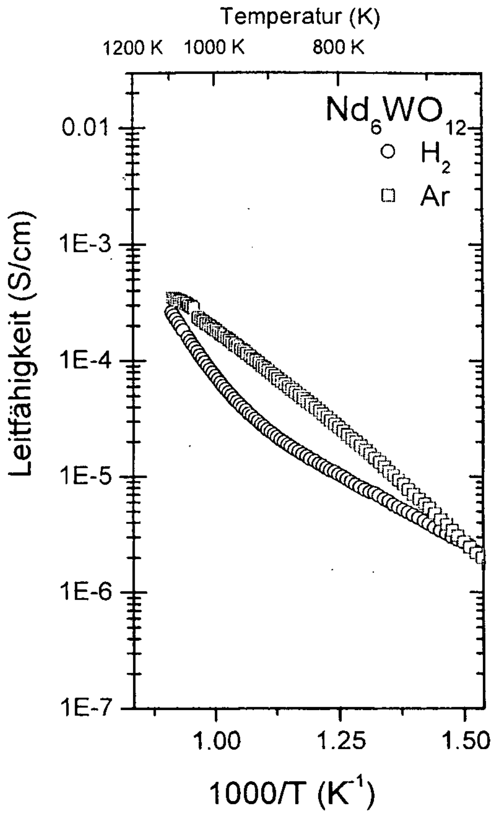


Figur 4a

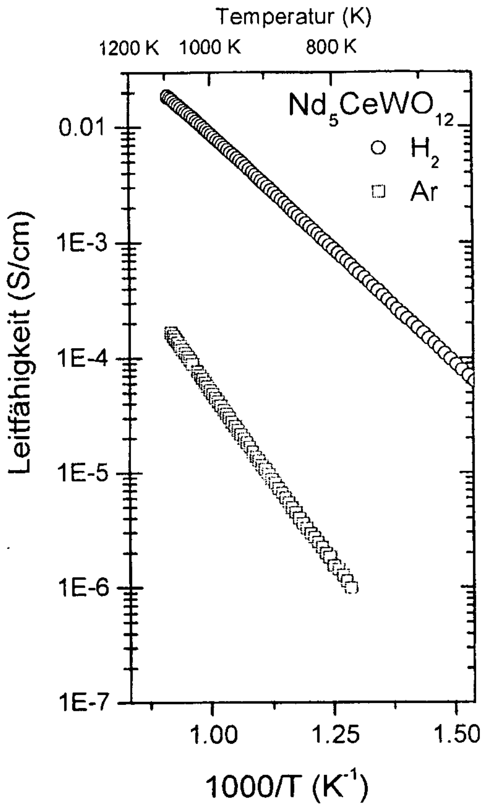


Figur 4b

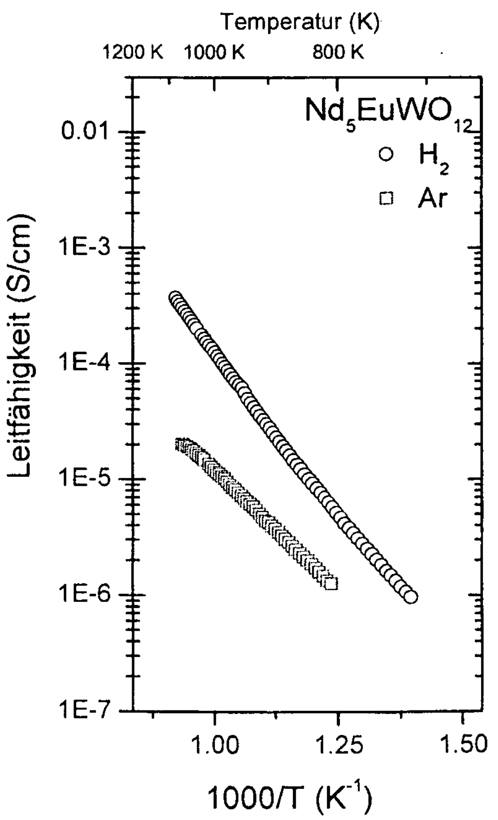


Figur 4c

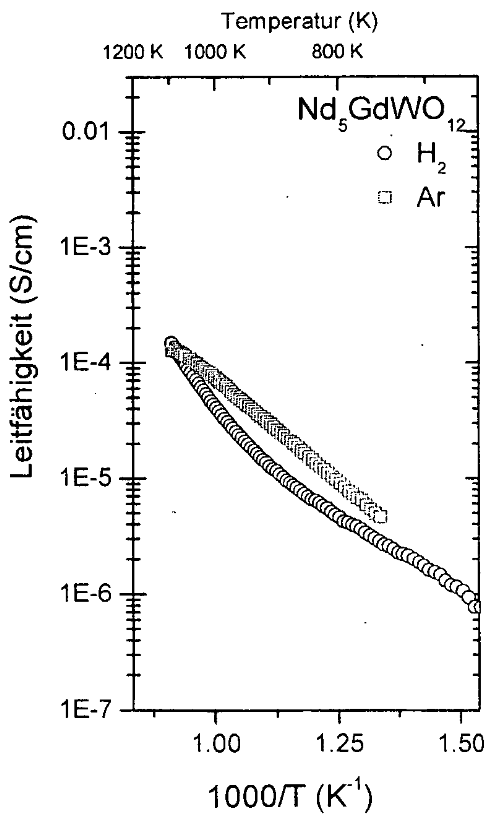


Figur 4d

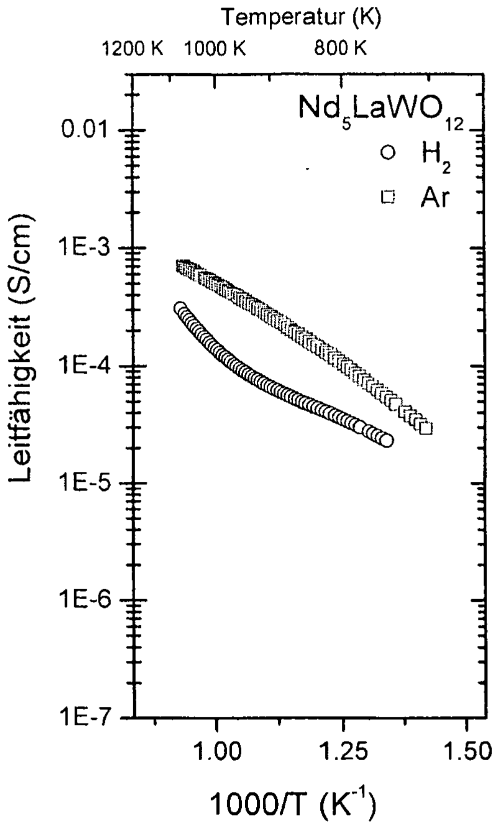


**Figur 4e**

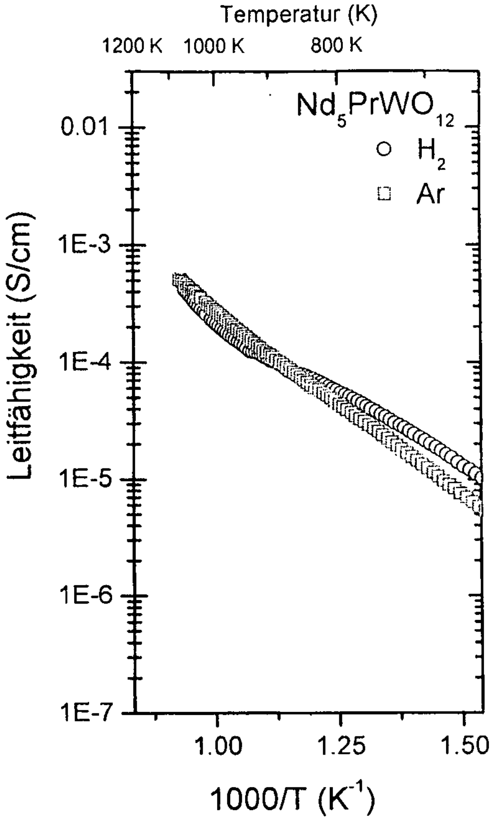


**Figur 4f**

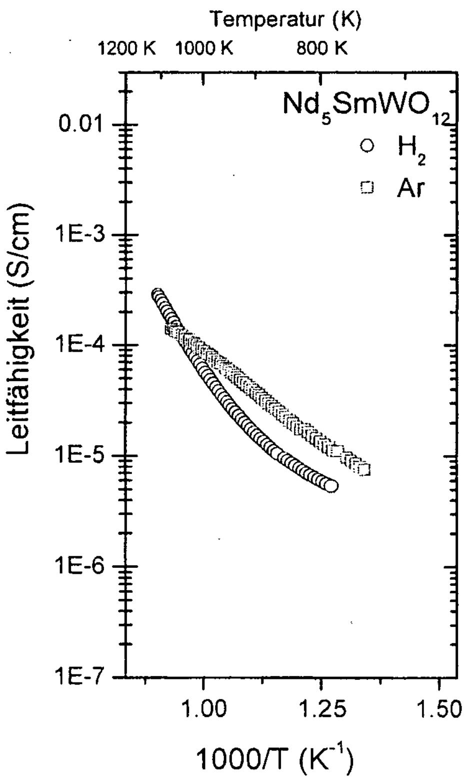


**Figur 4g**

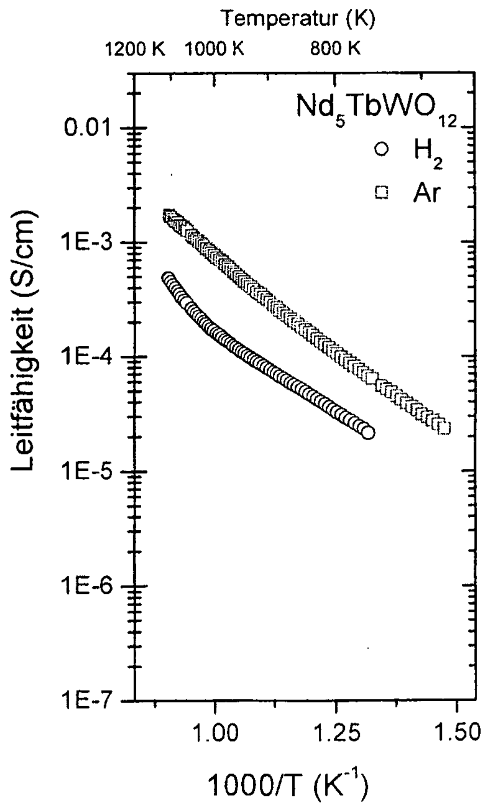


**Figur 4h**

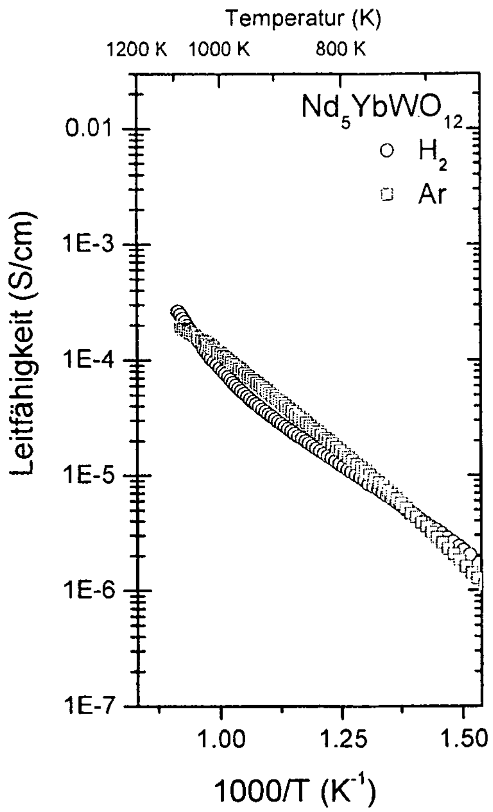
Temperatur (K)
1200 K 1000 K 800 K
Nd5YbWO12
H2
Ar
0.01
1E-3
1E-4
1E-5
1E-6
1E-7
Leitfähigkeit (S/cm)
1.00 1.25 1.50
1000/T (K-1)

**Figur 4i**

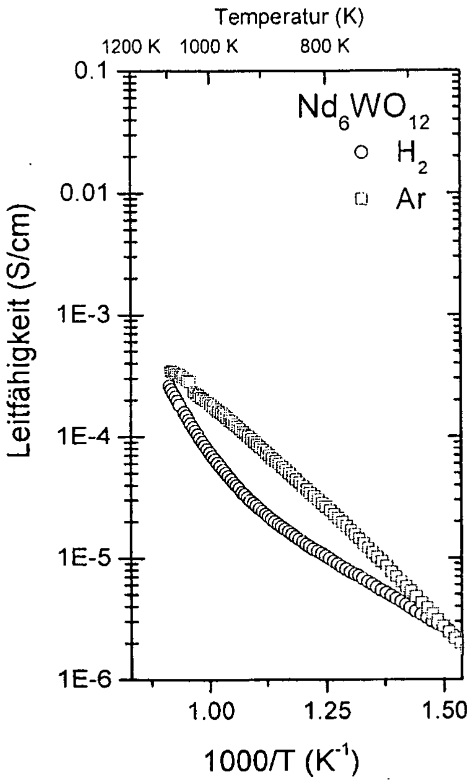


**Figur 5a**

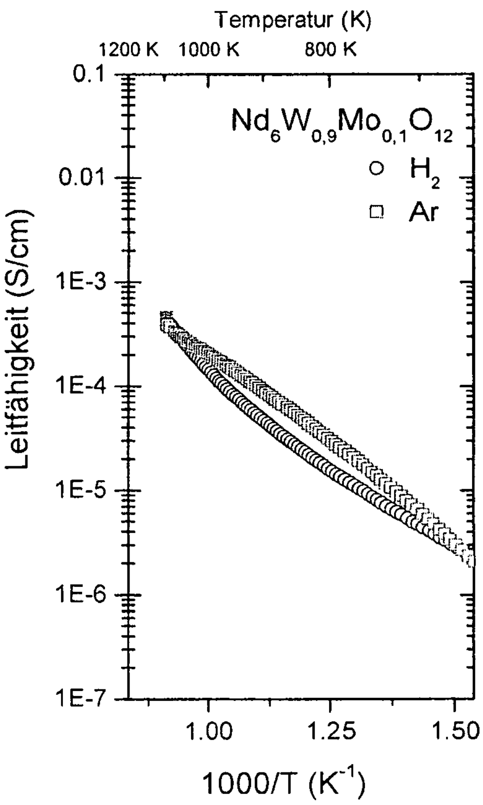


**Figur 5b**

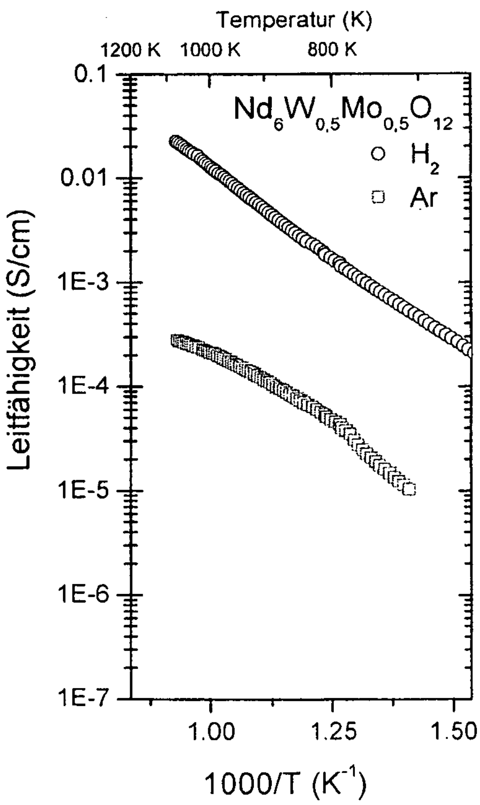


**Figur 5c**

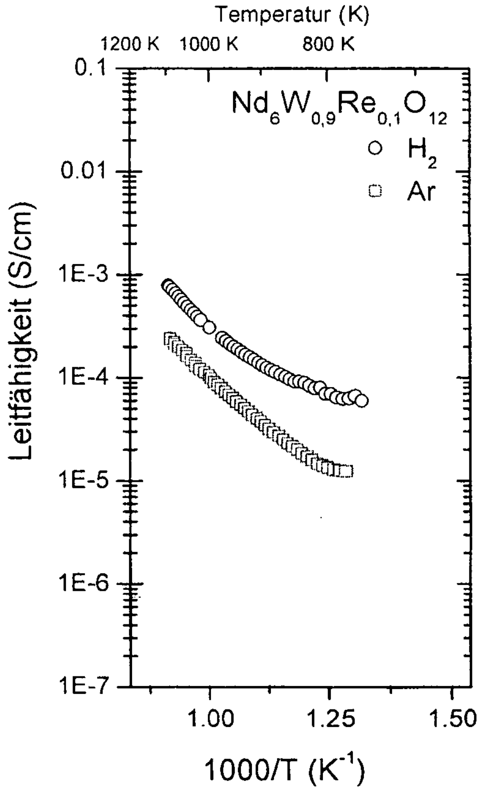


Figur 5d

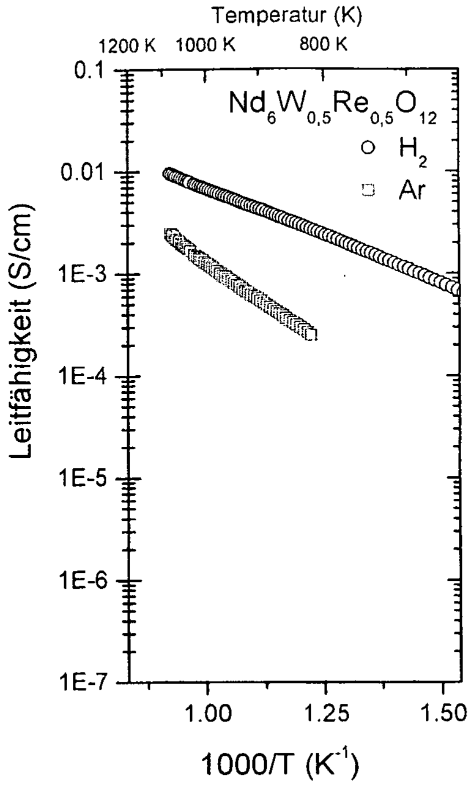


Figur 5e

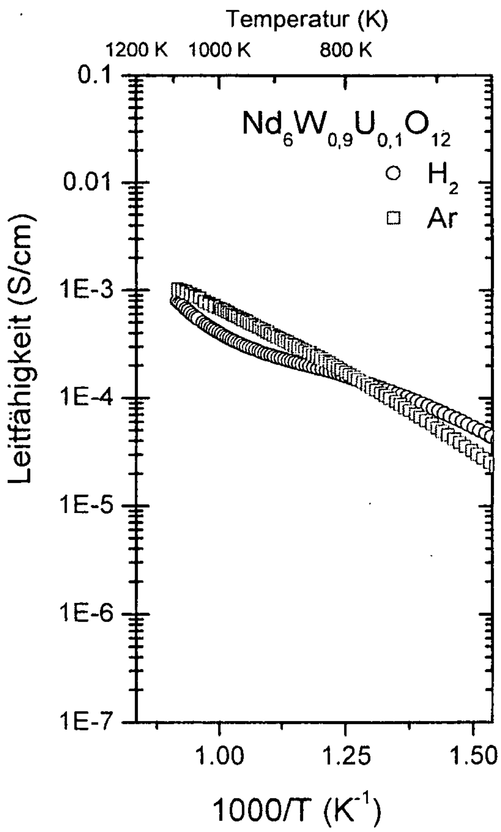


Figur 5f

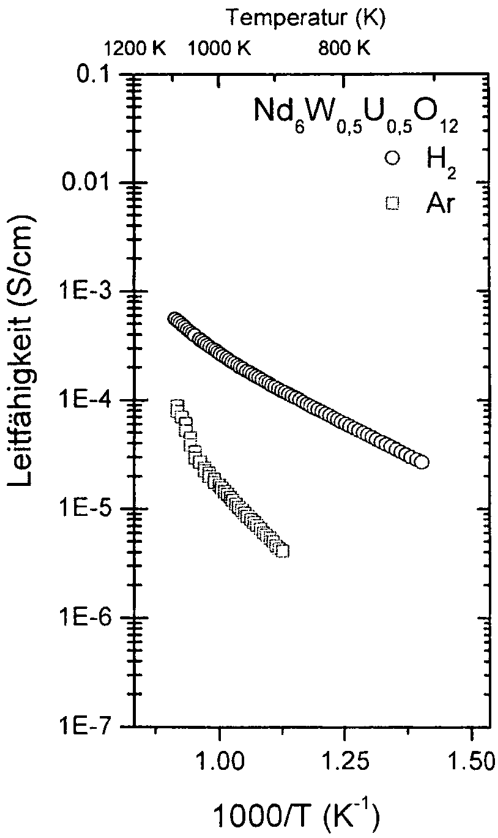


Figur 5g

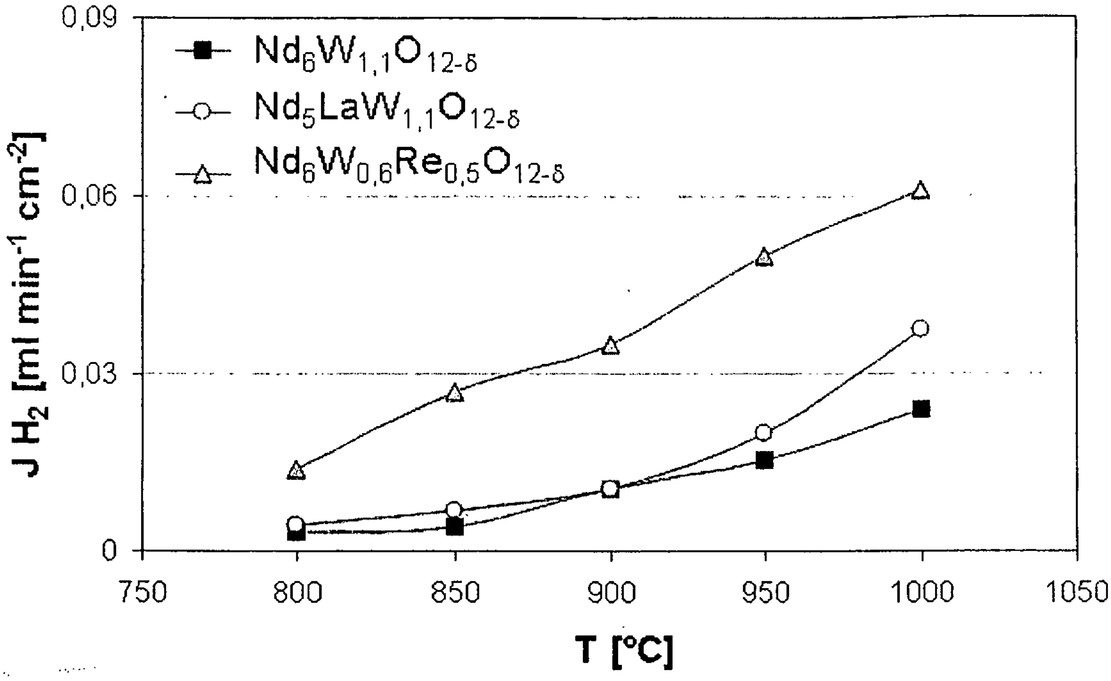


Figur 6a

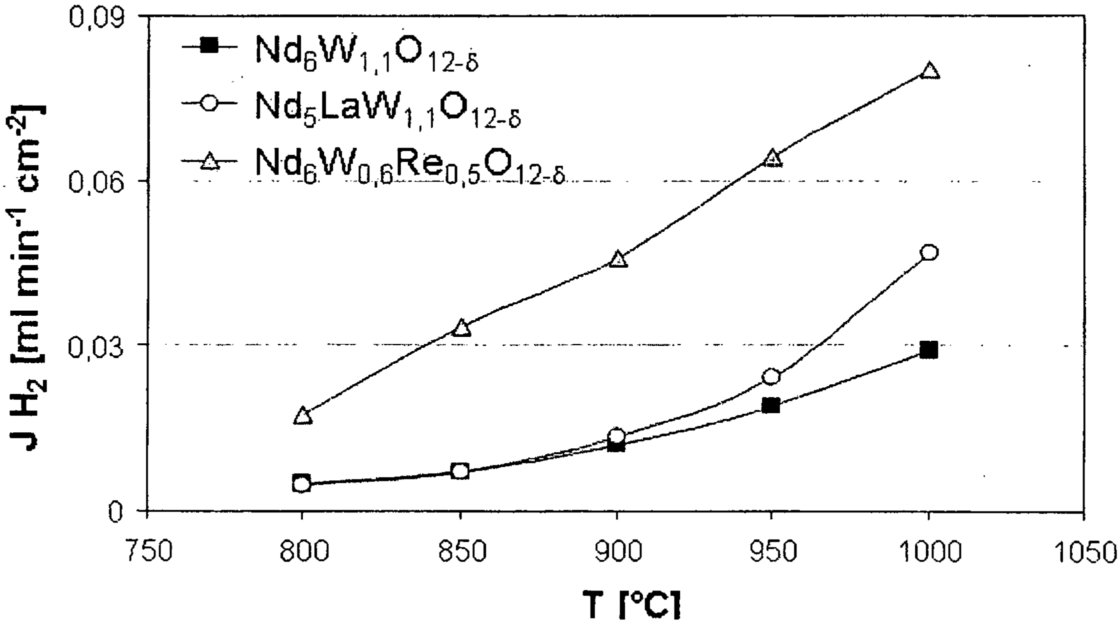


Figur 6b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2006015767 A1
- EP 048613 A


### In der Beschreibung aufgeführte Nicht-Patentliteratur


- **R. HAUSGRUD et al.** Effects of proton and acceptor substitution on the electrical conductivity of La6WO. *Journal of Physics and Chemistry of Solids,* 2008, vol. 69, 1758-1765
- **R. HAUSGRUD.** Defects and transport properties in LnWO12 (Ln = La, Nd, Gd, Er). *Solid State Ionics,* 2007, vol. 178, 555-560
- **SHIMURA T. ; FUJIMOTO S. ; IWAHARA H.** *Solid State Ionics,* 2001, vol. 143 (1), 117-123
- **HAUGSRUD R.** *Solid State Ionics,* 2007, vol. 178, 555-560
- **YOSHIMURA M. ; BAUMARD, J. F.** *Materials Research Bulletin,* September 1975, vol. 10 (9), 983-988